(19) Europäisches Patentamt / European Patent Office / Office européen des brevets

(11) EP 4 225 829 B1

(12) **EUROPEAN PATENT SPECIFICATION**

(45) Date of publication and mention of the grant of the patent:
**08.04.2026 Bulletin 2026/15**

(21) Application number: **21783558.6**

(22) Date of filing: **08.10.2021**

(51) International Patent Classification (IPC):
***C08G 65/40*** (2006.01) ***B01D 67/00*** (2006.01)
***B01D 69/12*** (2006.01) ***B01D 71/68*** (2006.01)
***B01J 19/00*** (2006.01) ***C08G 75/23*** (2006.01)
***C09J 171/00*** (2006.01) ***C09J 171/08*** (2006.01)
***H01M 8/02*** (2016.01) ***H01M 8/10*** (2016.01)

(52) Cooperative Patent Classification (CPC):
**C08G 65/40; B01D 71/68; C08G 75/23; C09J 171/00; C09J 171/08;** Y02E 60/50

(86) International application number:
**PCT/EP2021/077875**

(87) International publication number:
**WO 2022/078900 (21.04.2022 Gazette 2022/16)**

# (54) PROCESS FOR THE MANUFACTURE OF SULFONATED POLYARLYENE(ETHER) SULFONES

VERFAHREN ZUR HERSTELLUNG SULFONIERTER POLYARYLEN(ETHER)SULFONE

PROCÉDÉ DE FABRICATION D'SULFONE D'ÉTHER DE POLYARYLÈNE SULFONÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.10.2020 EP 20201331**
**29.04.2021 EP 21171093**

(43) Date of publication of application:
**16.08.2023 Bulletin 2023/33**

(73) Proprietor: **BASF SE**
**67056 Ludwigshafen am Rhein (DE)**

(72) Inventors:
- **MALETZKO, Christian**
**67122 Altrip (DE)**
- **WEBER, Martin**
**67056 Ludwigshafen (DE)**
- **WILMS, Axel**
**67227 Frankenthal (DE)**
- **STRAUCH, Joachim**
**67056 Ludwigshafen (DE)**
- **BURKHART, Sibylle**
**67056 Ludwigshafen (DE)**
- **TROTTE, Bernd**
**69198 Schriesheim (DE)**
- **BAUDER, Andreas**
**67056 Ludwigshafen (DE)**

(74) Representative: **BASF IP Association**
**BASF SE**
**GBI - Z078**
**67056 Ludwigshafen (DE)**

(56) References cited:
**EP-A1- 1 394 879**
**EP-A1- 1 561 768**
**EP-A1- 3 222 651**
**WO-A2-2008/052143**
**CN-A- 109 731 480**
**US-A- 3 620 684**
**US-A1- 2008 144 431**
**US-A1- 2009 001 188**
**US-A1- 2009 005 615**
**US-A1- 2014 350 197**
**US-A1- 2018 009 950**
**US-A1- 2019 077 919**

- **BLANCO J F ET AL: "Sulfonation of polysulfones: Suitability of the sulfonated materials for asymmetric membrane preparation", JOURNAL OF APPLIED POLYMER SCIENCE, JOHN WILEY & SONS, INC, US, vol. 84, no. 13, 24 June 2002 (2002-06-24), pages 2461 - 2473, XP002757722, ISSN: 0021-8995, [retrieved on 20020415], DOI: 10.1002/APP.10536**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to a process for the manufacture of a sulfonated polyarylene(ether)sulfone, particles essentially consisting of a sulfonated polyarylene(ether)sulfone, a solution comprising said particles as well as uses and applications thereof.

Polyarylene(ether)sulfones which comprise sulfonic acid groups or derivatives of sulfonic acid groups are also termed sulfonated polyarylene(ether) sulfones. Sulfonated polyarylene(ether)sulfones as well as methods for their manufacture have been known (US 7,258,941 B2). For instance, it is possible to polymerize sulfonated monomers together with non-sulfonated monomers. It is also possible to introduce sulfonic acid groups or its derivatives by reacting a polyarylene(ether) sulfone with respective sulfonation means. Concentrated sulfuric acid, fuming sulfuric acid, oleum, sulfur trioxide and chlorosulfonic acid have for example been disclosed as sulfonation means (US 7,081,497 B2, J. Appl. Pol. Sci. Vol 84, 2002, 2461-2473). It was reported that the sulfonation reaction can be carried out in the presence of an organic solvent such as a dialkylsulfone, e.g. DMSO or sulfolane (DE 11 2012 005 418 B4) or by using sulfur dioxide as solvent (EP 3 426 711 B1).

CN 109 731 480 A discloses a preparation method of a novel sulfonated polyarylether sulphone nanofiltration membrane composite material. The preparation method includes: synthesizing hydroquinone type sulfonated polyarylether sulphone (sPES-HQ) through a two-step method.

EP 1 561 768 A1 relates to a polyarylene ether-based compound including polymer components represented in general formula (1) and general formula (2).

EP 1 394 879 A1 relates to a polyelectrolyte for a solid polymeric fuel cell comprising an aromatic polyether sulfone block copolymer comprising a hydrophilic segment containing sulfonic acid groups and a hydrophobic segment having no sulfonic acid group at a hydrophilic segment weight fraction W2 to hydrophobic segment weight fraction W1 ratio falling within a range of $0.6 < W2/W1 < 2.0$. The polyelectrolyte for a solid polymeric fuel cell is inexpensive and durable, and its proton conductivity is less influenced by humidity and temperature.

US 2014/350197 A1 discloses a method for industrially advantageously manufacturing a sulfonated aromatic polymer while preventing a reduction in the molecular weight of the resulting sulfonated aromatic polymer.

US 2019/077919 A1 relates to a method of forming a sulfonated aromatic polymer, to the sulfonated aromatic polymer thus formed and to the method of using the sulfonated aromatic polymer in the manufacture of membranes.

Blanco et al (J. Appl. Polym. Sci. 2002, 84, 13, 2461-2473.) investigated the effect of the starting polymer on the reaction of sulfonation of polysulfones.

US 2018/009950 A1 discloses a method for desalinating a salt-containing polymer.

EP 3 222 651 A1 relates to a process for producing a polyaryl ether by reacting the components (a1) and (a2) in the presence of a carbonate compound (C) to obtain a salt-containing polymer (sP) containing the polyaryl ether and a salt (S). Following the reaction, the salt (S) is extracted from the salt-containing polymer (sP) to give a desalted polymer (eP) containing the polyaryl ether.

In US 2009/005615 A1 a method for producing nitrobenzene is disclosed which comprises forming a dispersion comprising benzene-containing droplets or particles dispersed in a mixture of concentrated nitric acid and concentrated sulfuric acid.

US 2008/144431 A1 discloses a device that disperses a substance in a liquid. The device has at least one dispersing chamber, which has at least one liquid inlet, at least one substance inlet, and at least one outlet. At least one driving means is placed inside the dispersing chamber while serving to set the liquid inside the dispersing chamber in motion so that at least one cavity with varying volume forms in the liquid for drawing in the substance through the substance inlet and forcing the substance made wet with liquid through the outlet.

US 3 620 684 A relates to an apparatus for reaction of fluids comprising two externally cooled substantially concentric, circular reaction surfaces, forming a reaction space therebetween of one-eighth to one-half inch and a rotor located concentrically between the reaction surfaces.

US 2009/001188 A1 discloses a method for introducing inhibitor into a fluid to be treated by forming a dispersion comprising droplets, particles, or gas bubbles of the inhibitor dispersed in a continuous phase of a carrier and a system for inhibiting an undesirable component.

WO 2008/052143 A2 relates to a mixing device for mixing a first and second material together to create an output mixture. The device includes a first chamber containing the first material coupled to a mixing chamber defined between a rotor and a stator.

One of the problems addressed by the present disclosure is to provide a process for manufacturing sulfonated polyarylene(ether)sulfones which yields particles of a size that can be conveniently handled. In particular such process was aimed at with which the size of the obtained particles can be controlled. Further it was aimed at obtaining particles with a low content of fines. In addition, the residual content of sulfuric acid in the particles should be low without producing large amounts of waste washing liquid. Further, a process was sought for producing sulfonated polyarylene(ether)sulfones in industrial scale.

Therefore, a process for the manufacture of a sulfonated polyarylene(ether)sulfone is disclosed which comprises feeding of a solution comprising a sulfonated polyarylene(ether) sulfone and sulfuric acid (solution S1) into a tooth rim dispersion machine, wherein the solution S1 is thereby contacted with a liquid (L1) comprising water.

The sulfonated polyarylene(ether)sulfone is in the following also denoted as "sPES".

Each process step described below can be carried out in only one apparatus or in more than one apparatus depending on the apparatus size and the amounts of compounds to be added. If more than one apparatus is used for a process step, the apparatus can be operated simultaneously or - particularly in a batchwise operated process - at a different time. This allows for example to carry out a process step in one apparatus while at the same time another apparatus for the same process step is maintained, for example cleaned. Further, in process steps where the contents of the apparatus remain for a certain time after all components are added, it is possible after feeding all compounds in one apparatus to feed the components into a further apparatus while the process in the first apparatus still continues. However, it is also possible to add the components into all apparatuses simultaneously and to carry out the process steps in the apparatus also simultaneously.

The process disclosed herein can be carried out using equipment of materials typical in chemical industry such as stainless steel, duplex-steel, titanium, Hastelloy or hard metal. Thereby, depending on what it is used for, and as the person skilled in the art appreciates, it is possible that a certain part of the equipment can be of a different material than other parts of the equipment. Since the solution S1 comprises sulfuric acid, which can incur corrosion, it is usually preferred to use corrosion resistant materials for any apparatus and any pipe connecting apparatuses which come into contact with the acid. For instance, it can be preferred to provide all surfaces which come into contact with the acid with an enamel layer. Further, it is also possible to use coated steel, wherein the coating is made of a material which is resistant against corrosion. Containers to dissolve the sPES in the sulfuric acid or reservoirs as well as any pipe or process chamber which come into contact with the sulfuric acid can for instance be enameled or of acid resistant steel such as a Hastelloy steel, for example Hastelloy 24610 or Hastelloy 24602.

The person skilled in the art appreciates that any indications of time periods given below may depend on parameters such as the amount of material handled.

In the following "at least one" in general means one or two or more, such as three or four or five or more, wherein more can mean a plurality or an uncountable. For instance, "at least one" can mean one or a mixture of two or more. If used in connection with chemical compounds "at least one" is meant in the sense that one or two or more chemical compounds differing in their chemical constitution, that is chemical nature, are described.

In the following "polymer" can mean homopolymer or copolymer or a mixture thereof. The person skilled in the art appreciates that any polymer, may it be a homopolymer or a copolymer by nature typically is a mixture of polymeric individuals differing in their constitution such as number average degree of polymerization, degree of branching or nature of end groups. This fact is also often described as distribution. Thus, in the following "at least one" as prefix to a polymer means that different types of polymers may be encompassed whereby each type may have a certain distribution addressed above.

The person skilled in the art further appreciates that any polymer is derived from monomers or oligomers or mixtures thereof which the polymer then comprises in reacted, polymerized form.

In the following "a polyarylene(ether)sulfone" or "a sulfonated polyarylene(ether)sulfone" is to be understood as meaning at least one polyarylene(ether)sulfone or at least one sulfonated polyarylene(ether)sulfone respectively. Typically, under the aspect of industrial scale manufacturing, it is preferably one polyarylene(ether)sulfone or one sulfonated polyarylene(ether)sulfone respectively.

In the following "polyarylene(ether)sulfone" may be abbreviated "PES".

In the following "a solvent" is to be understood as meaning at least one solvent. Typically, under the aspect of industrial scale manufacturing, it is preferably one solvent.

The process disclosed comprises that the solution S1 is fed into a tooth rim dispersion machine. Generally said tooth rim dispersion machine comprises at least one process chamber in which a mixing effect can be created by mobile parts. It can for instance be a rotor/rotor or a rotor/stator mixing device. In a rotor/rotor mixing device shear forces are generated in the at least one gap between two rotating parts such as two rotating rings or two rotating disks. In a rotor/stator mixing device shear forces are generated in the gap between a moving and a stationary part. Thereby, the stationary part can be the wall of the process chamber. Generally, solution S1 is centrifugally accelerated in a process chamber.

Under the aspect of achieving high or very high shear rates the thooth rim dispersion machine can be a rotor/rotor mixing device. An example for a tooth rim dispersion machine of rotor/rotor type is a co-twister for fluid systems.

Under the aspect of less machine complexity, the tooth rim dispersion machine preferably is of the rotor/stator type. Thereby the tooth rim dispersion machine can be a one- or more-stage apparatus.

In case the tooth rim dispersion machine is a more-stage apparatus it comprises at least two process chambers comprising two rotors and two stators. Usually, the rotors are mounted on the same shaft drive. Said more-stage apparatus can for instance have two or three process chambers. Said process chambers are hydraulically interconnected. Since in a more-stage apparatus all rotors are mounted on the same shaft drive they rotate with the same velocity. Generally, solution

S1 is fed into a first process chamber and after having passed this first process chamber is fed into a following process chamber. Typically, the rotor in a process chamber has a structured surface. Said surface can be the same for each of the rotors or can be different. It is possible that the surface structure varies over the length and/or the diameter of the rotor. Typically, the structured surface becomes finer and finer going from a first to a following process chamber. This has the advantage that agglomerates or coarse particles which may be generated in the process chamber are disaggregated. Likewise, it is possible that the stator can have a structured surface. It is possible that the surface structure remains the same or varies over the length and/or the diameter of the stator. In a more-stage tooth rim dispersion machine the number of process chambers which is passed through by solution S1, the rotational speed of the rotors, geometry of the rotor(s)/stator(s), as well as the surface properties, the viscosity of the solution S1 as well as its temperature determine the particle size of the sPES obtained.

Usually it is preferred that the tooth rim dispersion machine is a one-stage rotor/stator apparatus. These usually have the advantage that they can be easier serviced.

A suitable tooth rim dispersion machine usually has a wide operational window with regard to the flow through rate and the rotational speed at which it can be operated. Thereby a flow through rate window of less than 50 l/h or higher such as up to 100 l/h or much higher for example as high as 100 000 l/h, such as 130 000 l/h or higher can be advantageous. Generally, the flow rate can depend on divers parameters such as machine size, plant configuration e.g. pipe diameters and lengths or the pressure drop along the pipes, as well as viscosities of the fluids. A rotational speed window of less than 3 m/s or higher such as 5 or much higher, for example as high as 50 m/s or higher such as 60 m/s or higher can be advantageous. Thereby it can be operated at constant or varying flow rates and varying or constant rotational speeds. The shear rates at which the tooth rim dispersion machine can be operated are usually high or very high. Thus, the shear rate can be 3000 $s^{-1}$ or higher, preferably 5000 $s^{-1}$ or higher such as 10000 $^{s-1}$ or 100 000$^{s}$ or above. Good to very good results are usually obtained from 3000 to 250 000 $s^{-1}$, preferably from 30 000 to 200 000 $s^{-1}$.

An example of a tooth rim dispersion machine is for instance disclosed in WO 2006/66421. Examples of a tooth rim dispersion machine of the rotor/stator type are the DISPAX-Reactor ® series by IKA® Jahnke & Kunkel, Staufen, Germany. Further examples are the Megatron® series by Kinematica AG, Luzern, Switzerland, the Cavitron® series by Verfahrenstechnik v. Hagen & Funke GmbH, Sprockhövel, Germany and the Z- inline dispersion machine by Ystral GmbH, Ballrechten-Dottingen, Germany.

A process is disclosed comprising feeding solution S1 into a tooth rim dispersion machine. Under the aspect of obtaining a small particle size distribution and a defined upper particle size limit with a robust and easy to clean design a one-stage tooth rim dispersion machine is usually preferred.

The rotor of said one-stage tooth rim dispersion machine generally comprises a body, which is equipped with tooth ring rows. Between the tooth ring rows are groove-like channels into which the tooth ring rows of the stator reach without contact to the rotor. It is possible that the tooth ring rows have teeth of different fineness. It can be preferred that the inner tooth ring rows have coarser teeth, while the tooth ring rows which are located further outside have finer teeth. The distance between the tooth ring rows can be even. Likewise, it is possible that the tooth ring rows have different distances between each other. The number of the tooth ring rows depends on the diameter of the rotor. Commonly at least two tooth ring rows e.g. 3, 4, 5, 6 or 7 are present. Thus, for instance up to eight tooth ring rows or more, such as up to 9 or 10 can be present.

The rotor can be planar or can have a convex or concave form. Generally, it can be preferred that the rotor is planar or convex (conical). Under the aspect of avoiding abrasion and/or clogging it is preferred that the rotor is convex (conical). The form of the stator fits complementary to that of the rotor and can be planar, concave or convex respectively.

In particular, the tooth rim dispersion machine can be a one-stage tooth-rim dispersion machine equipped with a tooth and chamber tool. The tooth and chamber tool can be designed planar or conically. Preferably, the tooth and chamber tool is equipped with a cone system, that is to say with a rotor that is convex (concial) and a respectively complementary shaped stator.

It is further disclosed herein that the solution S1 is contacted with a liquid (L1) which comprises water.

Contacting the solution S1 with the liquid L1 can be in the tooth rim dispersion machine or a process chamber comprised therein. It is also possible that contacting the solution S1 with the liquid L1 can be outside the tooth rim dispersion machine or a process chamber comprised therein. Further it is possible that contacting the solution S1 with the liquid L1 takes place both within and outside the tooth rim dispersion machine or a process chamber comprised therein. If the tooth rim dispersion machine is a more-stage apparatus and comprises more than one process chamber it is possible that the contact between the solution S1 with the liquid L1 takes place within or outside one or more or all of the process chambers comprised in the more-stage apparatus. Under the aspect of minimizing clogging it is usually preferred that the Solution S1 is contacted with the liquid L1 within a process chamber of the tooth rim dispersion machine. Under this aspect is also usually preferred that the solution S1 is contacted with the liquid L1 within more or all of the chambers of a more-stage tooth rim dispersion machine.

Thereby, it is possible to transport, for instance to dose, press, pump, inject or expand; in particular, to dose or inject the liquid L1 into the solution S1. It is also possible to transport, for instance to dose, press, pump, inject or expand; in

particular, to dose or inject the solution S1 into the liquid L1.

In case a tooth rim dispersion machine of a rotor-stator type is used the rotor can for instance function as a pump which draws the liquid L1 from a reservoir or a continuous supply. Typically, it is preferred that the solution S1 is pumped into the gap between the rotor and the stator which is filled with the liquid L1 and thus contacted with L1.

Contacting the solution S1 with the liquid L1 typically has the effect that at least a portion of the dissolved sPES precipitates and that a suspension is obtained.

Contacting the solution S1 with the liquid L1 can be carried out continuously or discontinuously. For instance, a constant or essentially constant stream of the solution S1 can be transported to the tooth rim dispersion machine or a process chamber comprised therein respectively. Thereby it can be contacted with a constant or essentially constant stream of the liquid L1. It is also possible that a certain amount of the solution S1 can be transported to the tooth rim dispersion machine or a process chamber comprised therein respectively and thereby contacted with a certain amount of the liquid L1 prior to contacting a further amount of the solution S1 with a further amount of liquid L1. In particular, it can be preferred that the tooth rim dispersion machine is operated continuously or in other words in flow through mode.

The suspension can be discharged from the process chamber from the top, the bottom or from the side. Under the aspect of avoiding foaming of the suspension it is usually preferred that the suspension is discharged from the top of the process chamber. While it is possible that the suspension is discharged from more than one chamber outlet it is preferred that the suspension is discharged from one opening.

Generally, it is possible that the tooth rim dispersion machine is operated in single pass or in recirculation loop mode. Thereby, the tooth rim dispersion machine can be operated as described above continuously (in flow through mode) or discontinuously. Under the aspect of carrying out the process with the solution S1 and suspension of predefined and essentially constant viscosity it is preferred to carry out the process in single pass operation mode.

When the tooth rim dispersion machine is operated in recirculation loop, the suspension can be, instead of being transported off, cycled back to the tooth rim dispersion machine or a process chamber comprised therein respectively. Typically, thereby the suspension is transported to a vessel and then cycled back. The vessel to which the suspension is transported to then be cycled back can be a separate vessel or it can be the reservoir of the liquid L1. By cycling the suspension back, it can be contacted with a further amount of the solution S1, whereby the solids concentration in the suspension can increase. It also is possible that the suspension can be contacted with further solution S1 and further liquid L1, whereby it is possible to keep the solid content of the suspension in a pre-defined range. It is also possible that prior to cycling the suspension back to the tooth rim dispersion machine or a process chamber comprised therein respectively, at least a portion of the precipitate is removed from the suspension. The solution S1 can for instance be added to the suspension from which the precipitate was not removed or to the suspension from which the precipitate was at least partially removed.

Under the aspect of reducing the amount of waste liquid it is preferred to operate the process in recirculation loop. Thereby it is preferred that the suspension is contacted with further solution S1. Thereby, material comprised in the precipitate which is at least partially soluble in the liquid L1 can be extracted to a greater extend.

Thus, a process is disclosed herein, wherein the tooth rim dispersion machine is operated in recirculation loop.

The suspension can be cycled back once or more than once. The number of cycles can depend on the viscosity of the suspension. The viscosity can - in particular if no precipitate is removed and/or no further amount of liquid L1 is added prior to cycling the suspension back - increase due to the accumulated precipitate. Further the number of cycles can depend on the properties of the product, such as the desired purity to be achieved. Under theses aspects it is often preferable to cycle the suspension back 2 or more times. It can for instance be recycled up to 8, 9 or 10 or more times. Thereby 3 to 5 times are usually a sufficiently good compromise between the expenditure for the process and properties of the product, such as the size distribution and the purity of the particles obtained by the process.

As described above, the solution S1 is fed into a tooth rim dispersion machine. While diverse means for transporting the solution S1 are possible such as gravitation, usually it is preferred that a pump is employed to transport the solution S1. Thereby a pump is preferred which is equipped to transport liquids of a viscosity at least in the range of the solution S1 or higher. Usually it is preferred that a pump equipped to transport liquids of a viscosity of at least 200 mPas, preferably of at least 5 000 mPas, , such as up to 20 000 mPas, in each case measured at 65°C and a shear rate of 10 $s^{-1}$, whereby for determining the viscosity a Brookfield RVDV-I Prime viscosimeter can be used, transports the solution S1. Pumps which are equipped to transporting liquids of high or very high viscosities are for instance progressing cavity pumps or rotating piston pumps. Among the pumps it can be preferred to use a gear pump, in particular a gear pump which is equipped to transport liquids of the above specified viscosities.

Thus, a process is disclosed wherein a pump, equipped to transport liquids of a viscosity of at least 200 mPas, measured at 65°C and a shear rate of 10 $s^{-1}$, whereby for determining the viscosity a Brookfield RVDV-I Prime viscosimeter can be used, transports the solution S1. Also, a process is disclosed wherein the pump is a gear pump.

As described above the tooth rim dispersion machine can function as a pump to draw and thus transport liquid L1. The same holds for the suspension when the tooth rim dispersion machine is operated in recirculation loop. It can then function as a pump which draws and thus transports the suspension. It is however also possible that the liquid L1 and/or the

suspension is actively transported. Thus, for instance a pump can transport the liquid L1 and/or the suspension.

With respect to the active transport of the suspension a pump is of advantage which does not crush the solids contained in the suspension so that the content of fines in the suspension and thus the particles obtained from the process is not increased. A pump suitable for this purpose is for example a cavity pump or rotating piston pump.

To avoid operative complexity, it is usually preferred not to actively transport the liquid L1 nor the suspension to the tooth rim dispersion machine and rather to employ the tooth rim dispersion machine as a pump to draw the liquid L1 and/or the suspension.

To avoid clogging of parts or apparatuses used to carry out the process, such as connecting lines, in particular any parts or apparatus in which the solution S1 is conveyed or processed, it is usually preferred to flush these parts or apparatuses with sulfuric acid to avoid unwanted polymer precipitation due to contact with traces of water. In particular, it may be advantageous to do so during the startup of the process or when the process is interrupted or stopped. It may also be needed to cleanse parts or apparatuses of precipitate by sulfuric acid intermittently. In particular for the latter purpose it is preferred that the process includes means for allowing a sulfuric acid flow and for stopping the flow of solution S1 and the liquid L1 and/or the suspension. A suitable means can for instance be a three-way-valve. Generally, it is efficient and therefore usually preferred to use the gear pump to fill up parts or apparatuses or to cleanse them with the sulfuric acid.

The parts of the equipment which convey or hold the liquid L1 and/or the suspension can clog by unwanted settling of the precipitated polymer. These can typically be cleaned/cleared by flushing with water.

The solution S1 comprises a sulfonated polyarylene(ether)sulfone (sPES) and sulfuric acid. Thereby the sulfonated polyarylene(ether)sulfone can be one or a mixture of two or more different sulfonated polyarylene(ether) sulfones. Preferably the polyarylene(ether)sulfone is one polyarylene(ether)sulfone. The solution S1 can originate from a process of making sPES or it can be obtained by dissolving sPES in sulfuric acid. Under the aspect of avoiding additional steps of isolating sPES after its manufacture it is preferred that the solution S1 is the reaction mixture obtained from manufacturing sPES. Thereby it is possible that the reaction mixture is directly transported to a tooth rim dispersion machine. It is also possible that one or more intermediate steps are gone through such as transportation to a reservoir or addition of a diluent such as additional sulfuric acid.

The solution S1 can consist of or essentially consist of sPES and sulfuric acid. It is also possible that the solution S1 comprises aside from sPES and sulfuric acid additional material such as residual material from the polymerization of sPES such as residual monomers, salts, residual solvent, and/or from the sulfonation such as sulfur trioxide or chlorosulfonic acid. Often it is preferred that the solution S1 comprises of from 1 to 25 % by weight, more preferably of from 3 to 20 % by weight of sPES and of from 75 to 99 % by weight, more preferably of from 80 to 97 % by weight of sulfuric acid, in each case, based on the solution S1. The additional material which may be comprised in the solution S1 is usually comprised in minor amounts such as from 0 to 5 % by weight, whereby less is generally preferable, for instance up to 3 % by weight based on the sPES.

While the concentration of the sulfuric acid can vary in such range that the sPES dissolves therein in the amounts desired, concentrated sulfuric acid to fuming sulfuric acid or oleum are typical. It is usually preferred that the sulfuric acid is not oleum and does not contain sulfur trioxide. Thereby is it usually preferred that the concentration of the sulfuric acid ranges of from 95% to 100% by weight, based on the sulfuric acid, more preferably of from 96% to 99%, such as 97% or 98% by weight, based on the sulfuric acid. From the aspect of handling the solution S1, sulfuric acid which does not contain sulfur trioxide is preferred. From the aspect of obtaining sPES which has a light color, is colorless or essentially colorless a sulfuric acid with a concentration of from 96 to below 100% is most preferred.

The liquid L1 comprises water. The water can be process water or purified water, such as desalinated water, for instance distilled water. Often it is preferred that the water is deionized water. Employing deionized water has the advantage that the sulfonic acid groups contained in the sPES are not deprotonated. The liquid L1 can consist of, or essentially consist of, water.

Under the aspect of reduction of corrosion of the equipment used in the process, in particular of the parts of the equipment in which the solution S1 is contacted with the liquid L1, it is preferred that the liquid L1 comprises water and nitric acid. The nitric acid can function as corrosion inhibitor. Generally, the amount of nitric acid is low or very low. Mostly traces of nitric acid are sufficient. Thus, the liquid L1 can for instance comprise 1% by weight or less, in particular 0.5 % by weight or less, in each case based on the weight of the liquid L1, of nitric acid. Thus, it can be preferred that the liquid L1 contains, preferably essentially consist of desalinated water and nitric acid, such as 99 to 100 % by weight of desalinated water and 0 to 1% by weight of nitric acid, such as 99 to 99.9% by weight of desalinated water and 0.1 to 1 % by weight of nitric acid, in each case based on the liquid L1.

Since the solution S1 comprises sulfuric acid heat is usually generated when the solution S1 is contacted with the liquid L1. While it may be to a lesser extend the same essentially holds for the suspension in case the process is operated in recirculation mode and the suspension is contacted with the solution S1. Also, as the person skilled in the art appreciates the temperature of any portion of the liquid L1 which is cycled back when the process is carried out in recirculation mode may be higher than the temperature of any portion of the liquid L1 prior to its initial contact with the solution S1. Therefore, under the aspect of avoiding damage to the sPES it is preferred that the temperature of the liquid L1 is controlled. Generally,

it is preferred that the temperature of the liquid is below 50°C, for instance below 45°C, 40°C or 35°C, in each case measured prior to its initial contact with the solution S1. The liquid L1 can for instance be cooled to a point above its solidification point, thus it may have a temperature around the freezing point of water for instance 1°C, 2°C, 3°C or 5°C, in each case measured prior to its initial contact with the solution S1. A temperature of the liquid L1 from 10 to 25°C efficiently avoids damage to the sPES and energy consumption due to cooling is acceptable for an industrial scale production. At the same time particles are obtained which have a favorable size and size distribution. Under said aspects a temperature of the liquid L1 from 10 to 25 °C is usually preferred.

The suspension which is obtained by contacting the solution S1 with the liquid L1 as described above either in the linear operation mode or the recirculation operation is typically subjected to a solid-liquid separation. Mostly it is preferred that the suspension is continuously transported to an apparatus suited for solid-liquid separation. While it is possible that the suspension is for instance stored, e.g. in a buffer container, prior to the solid-liquid separation it is often preferred that it is directly transported to an apparatus suited for solid-liquid separation. The liquid-solid separation can be a filtration or sedimentation or a centrifugation. Either one can be carried out continuously or discontinuously. Under the aspect of speed, it can be preferred that the solid-liquid separation is a filtration. Under the further aspect of reuse of the filtered L1 for further precipitation of solution S1 it can be preferred that the filtration is carried out continuously. Apparatus for a solid-liquid separation are generally known in the art. Various apparatus can be used for the purpose of the liquid-solid separation in the disclosed process, for example a centrifuge, a decanter or a filter which can be a non-pressurizeable or a pressurizeable filter. Thus, a belt filter or a Nutsch can be employed. Typically, a Nutsch type filter can be preferred. In particular a Nutsch to which pressure can be applied for instance by applying an inert gas.

If the solid-liquid separation is a filtration, the filtration apparatus comprises at least one filter element which can be made of a material which has a good or very good chemical resistance. Such a material can be a polymeric or a chemical resistant metal as described above for the used apparatus. The at least one filter element for example can be a filter cartridge, filter membrane, metal sieve, metal wovens, or filter cloth. If the at least one filter element is a filter cloth, preferred materials are usually flexible, particularly flexible polymeric materials such as those which can be fabricated into wovens. These can for instance be polymers which can be drawn or spun into fibers. Particularly preferred as material for the at least one filter element is a polyether ether ketone (PEEK), polyamide (PA) or fluorinated polyalkylenes, for example ethylene chlorotrifluoroethylene (ECTFE), polytetrafluoroethylene (PTFE), polyvinylidene fluoride (PVDF), fluorinated ethylene-propylene (FEP) or polyarylene(ether)sulfone (PESU). In the case of a metal filter/sieve, the used metal sheets or filaments should be made out of corrosion resistant alloys.

Under the aspect of keeping the total organic content (TOC) in the wastewater as low as possible a filter element with fine or very fine filter pores is preferred. Typically, a filter with a nominal pore size of larger or much larger than 800 $\mu$m lead to an unwanted increase in TOC. Usually a nominal pore size of less than 5 $\mu$m such as 3 $\mu$m or much less will increase the filtration time. Thus, generally a nominal pore size of from 5 to 800 $\mu$m, preferably up to 500 $\mu$m such as from 5 to 200 $\mu$m is preferred. A good compromise between filtration time and TOC can be to keep the nominal pore size below 100 $\mu$m. It can be most preferred to employ a Nutsch with a nominal pore size of from 10 to 50 $\mu$m. It can be more preferred that filtration is carried out using a pressurized Nutsch with a nominal pore size of from 10 to 50 $\mu$m while stirring.

Upon the liquid-solid separation as described above the obtained solid typically contains a small residual amount sulfuric acid and/or residual material originating from the polymerization of the monomers to the sPES and/or the sulfonation reaction. The effort for further purification is therefore generally small. The solid can for instance be washed or extracted with a liquid L2. Under the aspect of least apparatus expenditure and complexity it is generally preferred to wash the solid in the pressurizable filter with the liquid L2 Thereby the filter cake can be moved in the liquid L2, for instance stirred. Under the aspect of conserving resources and effectiveness - in particular for a process in industrial scale - it is usually preferred to employ an extraction column. It is for instance possible to use an extraction column in continuous mode. Thereby an extraction column is usually preferred which is operated in counter current principle using liquid L2.

Liquid L2 can be any liquid suited to remove sulfuric acid and/or residual material. Depending for instance on how the sPES was obtained or from the result of a respective probing, the liquid L2 can be chosen and can for instance be a mixture of different liquids. If the solid is washed with the liquid L2 it is possible to vary the composition or nature of the liquid L2 from washing cycle to washing cycle. Under the aspect of ease of industrial production, it is mostly preferred that the liquid L2 comprises or consists of liquid L1. It can be most preferred that the liquid L2 consists of liquid L1. The liquid L2 can be provided from a different source than the liquid L1 or from the same source. It is usually most preferred that the liquid L2 is water. Under the aspect of avoidance of deprotonation of the sulfuric acid groups and of residual nitric acid L2 is most preferably desalinated water.

Typically, a few washing cycles with the liquid L2, preferably water, in particular desalinated water, are sufficient to effectively remove sulfuric acid and/or residual material. In principle the temperature of the liquid L2 can be any temperature which does neither decomposes the liquid L2 nor the obtained sulfonated product. Typically, higher temperatures increase the effectivity of the washing. At the same time energy consumption for the washing process is typically increased the higher the temperature of the liquid L2 is kept. Therefore, usually it is preferred that the temperature of the liquid L2 is below its boiling point at the pressure used for the washing. In case the liquid L2 is water it can

be preferred that the temperature is below 100 °C, such as below 70°C, preferably from 20 to 50°C. The number of washing cycles can be determined by respective probing for remaining sulfuric acid and/or the pH of the effluent liquid L2. The washing can for instance be carried out until a predefined sulfuric acid concentration is reached. Preferably the washing is carried out to a sulfuric acid concentration of 3 mg KOH/g solid, more preferably of less than 1 mg KOH /g solid, which can be determined by acid-base titration of the free acid of dry solid dissolved in DMF as described in the examples.

Porous particles are obtained comprising sPES and liquid L2, in particular desalinated water. For certain applications it may be preferred to not dry the particles and to use them as such. This is for instance the case if they are to be used in processes in which they are milled in the presence of a solvent into a very fine dispersion and water is employed as softening agent, for example for non-stick coatings. Usually it is preferred to dry the particles after the solid-liquid separation. For most applications it is preferred that the water content is 2% by weight or less based on the sPES. Methods for drying polymeric particulate solids are generally known in the art. Thus, drying can for instance be carried at elevated temperatures, for instance above room temperature, such as above the boiling point of the liquid L2, for instance above the boiling point of water. Thereby drying can be carried out under reduced pressure to reduce the needed temperatures. It is also possible to use a freeze-drying method, thus at lowered temperatures, such as below room temperature. Under the aspect of avoiding damage to the sPES it is preferred to dry the particles under vacuum and at a temperature below 100°C, in particular at 80°C or below. Thereby the temperature can be constant or follow a program. Apparatus for drying particulate solids at elevated temperature are generally known. Examples thereof are drying ovens which can be evacuated, pressure filters, which can be heated and evacuated and paddle dryers which can be evacuated.

The energy required for the drying process can be reduced if prior to the drying at an elevated or lowered temperature the liquid L2, preferably desalinated water, is mechanically reduced, preferably pressed out. Apparatuses for said pressing out are generally known. Examples are filter presses or calanders. Therefore, it may be particularly preferred to first mechanically remove the water, in particular by pressing it out, and then to dry the particles at a temperature below 100 °C, in particular at 80°C or below. Thereby the temperature can be constant or follow a program. The drying can also be performed in a fluidized bed with hot air or other suitable gases.

Under the aspect of least apparative complexity, it is preferred that at least two, more preferably all of the operations liquid-solid separation, washing and drying are carried out on one apparatus. In particular a filter, preferably a pressurizable filter, more preferred a Nutsche which in particular is a pressurizable Nutsche, to which heat and vacuum can be applied, can serve this purpose. Under the aspect of higher production capacity and higher through-put it is preferred to have specialized apparatuses for each of said operations.

Particles consisting essentially of a polyarylene(ether)sulfone (sPES) are obtained which have a foam structure. Thus, essentially all or all of the particles are porous. The porosity of a particle is defined as the fraction (percentage) of a given volume which does not contain any matrix but is instead gas-filled or even evacuated. It can be calculated by dividing the particle density by the density of the matrix. A quotient $<1$ indicates the presence of pores. The matrix density can be determined as described in DIN EN ISO 1183-3, with a Helium Gas Pyknometer. The matrix density of the sPES is generally higher than that of the respective unsulfonated polymer and depends on the sulfonation degree. The porosity can be 25% or higher, whereby the porosity is in most cases 30% or above. The porosity can for instance be up to 80%, whereby it is often up to 70% or lower. Under the aspect of ease of handling of the particles it is mostly preferred that the porosity is from 40 to 60%. Pressing the particles, for instance in the course of washing or drying steps, the porosity of the particles is reduced due to the compacting effect. Thus, the porosity can be below 25%.

The foam structure of the particles is generally advantageous as they therefore can be readily dissolved in a solvent (hereunder also referred to as solvent L3). The dissolution time (to prepare a 5% by weight solution in NMP under shaking at 25°C) is preferably an hour or less, in particular 30 minutes or less, such as 20 or 10 minutes or less. It often takes several minutes to obtain a solution, in most cases 5 minutes or more.

Usually the particles obtained are of irregular shape. They generally have a size which can be well handled in industrial processes. Generally, the particle size ($d_{50}$ value, volume fraction) is above 300 $\mu$m, such as 400 $\mu$m and more and below 3000 $\mu$m, such as 2000 $\mu$m or 1000 $\mu$m or below. Usually particles are preferred which have a particle particle size ($d_{50}$ value, volume fraction) from 500 to 2000 $\mu$m, can be determined by laser diffraction as described in the examples.

Under both the aspect of ease of solid-liquid separation as well as under the aspect of handling dried particles in further production processes it is advantageous that the solids as well as the particles obtained after drying have a low content of fines. The particles obtained usually have a low or very low content of fines. Particles having less than 20% by weight, based on the particles, of particles of mesh size below 100 $\mu$m, determined by air-jet sieving are preferred. More preferably, the particles have less than 10 % by weight, based on the particles, of particles of mesh size below 100 $\mu$m, determined by air-jet sieving. Typically, a certain content of fines is present. It is usually about 5% by weight or lower, based on the particles, of particles of mesh size below 100 $\mu$m, determined by air-jet sieving. Applicable conditions for determining the particle size by air-jet sieving is given in the examples.

Thus, particles having a foam structure and consisting essentially of a sPES having less than 20% by weight, based on the particles, of particles of mesh size below 100 $\mu$m, determined by air-jet sieving is disclosed.

Thus, also preferred particles consisting essentially of a polyarylene(ether)sulfone (sPES) are disclosed with a

| porosity [%] | particle size [μm] | content of fines below 100 μm [%] |
|---|---|---|
| 25 to 80 | 300 to 3000 | Less than 20 |
| 25 to 80 | 300 to 3000 | Less than 10 |
| 25 to 80 | 300 to 3000 | Less than 5 |
| 25 to 80 | 500 to 2000 | Less than 20 |
| 25 to 80 | 500 to 2000 | Less than 10 |
| 25 to 80 | 500 to 2000 | Less than 5 |
| 30 to 70 | 300 to 3000 | Less than 20 |
| 30 to 70 | 500 to 2000 | Less than 20 |
| 40 to 60 | 300 to 3000 | Less than 20 |
| 40 to 60 | 300 to 3000 | Less than 10 |
| 40 to 60 | 300 to 3000 | Less than 5 |
| 40 to 60 | 500 to 2000 | Less than 20 |
| 40 to 60 | 500 to 2000 | Less than 10 |
| 40 to 60 | 500 to 2000 | Less than 5 |

whereby the porosity, the particle size and the fines are determined as described above.

Particles consisting essentially of a sPES wherein the sPES has a content of free sulfuric acid of less than 3 mg KOH / g sPES are disclosed. Particles having a foam structure and consisting essentially of a sPES, wherein the sPES has a content of free acid of less than 3 mg KOH / g sPES are disclosed as well. Further, particles having a foam structure consisting essentially of a sPES wherein the sPES has a content of free acid of less than 3 mg KOH / g sPES and having less than 20% by weight, based on the particles, of particles of mesh size below 100 μm, determined by air-jet sieving, are disclosed. In each case the content of free sulfuric acid is determined by titration as given in the examples.

The sPES can be obtained from any of the processes known or it can be obtained in that the person skilled in the art applies techniques which are generally known in the art. Thus, it may be obtained by polymerizing respectively sulfonated monomers or by reacting a polyarylene(ether)sulfone with a sulfonating agent (post-sulfonation). For industrial scale production it is often preferred to use the post-sulfonation method.

Polyarylene(ether)sulfone is known per se to a person skilled in the art. Preferably a polyarylene(ether)sulfone comprises building blocks of general formula (I)

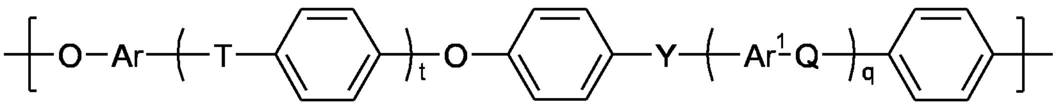

(I)

where

t and q are each independently 0, 1, 2 or 3,

Q, T and Y are each independently a chemical bond or a group selected from -O-, -S-, $-SO_2-$, S=O, C=O, -N=N- and $-CR^aR^b-$, where $R^a$ and $R^b$ are each independently a hydrogen atom or a $C_1$-$C_{12}$ alkyl, $C_1$-$C_{12}$ alkoxy or $C_6$-$C_{18}$ aryl group, and wherein at least one of Q, T and Y is $-SO_2-$ and

Ar and $Ar^1$ are each independently an arylene group having from 6 to 18 carbon atoms.

When Q, T or Y is a chemical bond under the above-recited conditions, this is to be understood as meaning that a chemical bond links the neighboring groups to the left and right together directly. It will be readily appreciated that at least one of the groups consisting of Q, T and Y being $-SO_2-$ means that at least one of Q, T and Y in formula (I) is $-SO_2-$. The consequence is, for example, that when q is = 0, at least one of T and Y is $-SO_2-$; when, for example, t is = 0, at least one of Q and Y is $-SO_2-$ and when q = 0 and t = 0 then Y is $SO_2$.

When Q, T or Y are $-CR^aR^b-$, $R^a$ and $R^b$ are each independently a hydrogen atom or a $C_1$-$C_{12}$ alkyl, $C_1$-$C_{12}$ alkoxy or $C_6$-$C_{18}$ aryl group.

Preferred $C_1$-$C_{12}$ alkyl groups include linear and branched, saturated alkyl groups having from 1 to 12 carbon atoms. The following moieties are suitable in particular: $C_1$-$C_6$ alkyl, such as methyl, ethyl, n-propyl, i-propyl, n-butyl, sec-butyl, 2- or 3-methylpentyl and longer-chain moieties such as unbranched heptyl, octyl, nonyl, decyl, undecyl, lauryl and the singly or multiply branched analogs thereof.

The alkyl moieties in the aforementioned usable $C_1$-$C_{12}$ alkoxy groups include the above-defined alkyl groups having from 1 to 12 carbon atoms. Preferentially employable cycloalkyl moieties include, in particular, $C_3$-$C_{12}$ cycloalkyl moieties, for example cyclopropyl, cyclobutyl, cyclopentyl, cyclohexyl, cycloheptyl, cyclooctyl, cyclopropylmethyl, cyclopropylethyl, cyclopropylpropyl, cyclobutylmethyl, cyclobutylethyl, cyclopentylethyl, cyclopentylpropyl, cyclopentylbutyl, cyclo-pentylpentyl, cyclopentylhexyl, cyclohexylmethyl, cyclohexyldimethyl and cyclohexyltrimethyl.

Ar and $Ar^1$ are each independently a $C_6$-$C_{18}$ arylene group. Ar and $Ar^1$ are preferably derived from an electron-rich aromatic substance very susceptible to electrophilic attack, preferably selected from the group consisting of hydroquinone, resorcinol, dihydroxynaphthalene, in particular 2,7-dihydroxynaphthalene, and 4,4'-biphenol. Ar and $Ar^1$ are preferably an unsubstituted $C_6$ or $C_{12}$ arylene group.

As $C_6$-$C_{18}$ arylene groups Ar and $Ar^1$ there may be used, in particular, phenylene groups, such as 1,2-, 1,3- and 1,4-phenylene, naphthylene groups, for example 1,6-, 1,7-, 2,6- and 2,7-naphthylene, and also the anthracene-, phenanthrene- and naphthacene-derived arylene groups.

Typically, Ar and $Ar^1$ are each preferably independently 1,4-phenylene, 1,3-phenylene, naphthylene, in particular 2,7-dihydroxynaphthylene or 4,4'-biphenylene. It is usually more preferred that Ar and $Ar^1$ are each preferably independently 1,4-phenylene, 1,3-phenylene or 4,4'-bisphenylene. In particular, most often Ar and $Ar^1$ are each preferably independently unsubstituted 1,4-phenylene, 1,3-phenylene or 4,4'-biphenylene.

The preferred polyarylene(ether)sulfone usually comprises at least one of the following building blocks Ia to Io as structural repeat units:

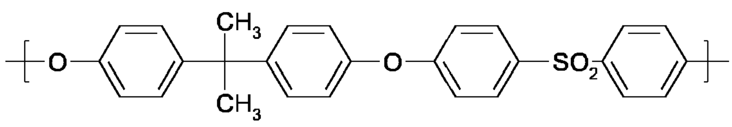
Ia

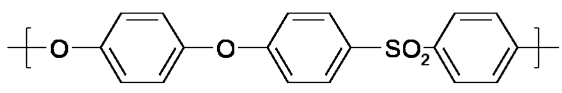
Ib

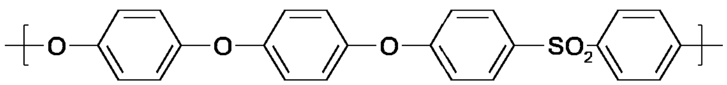
Ic

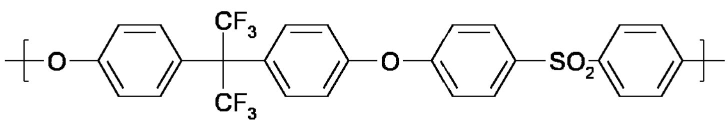
Id

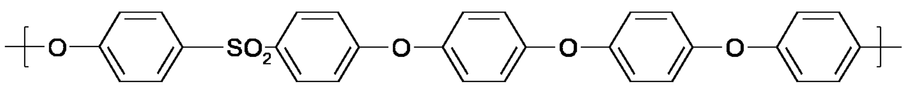
Ie

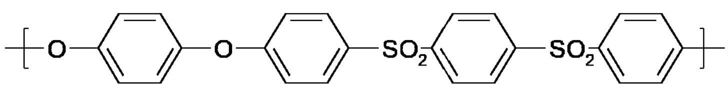
If

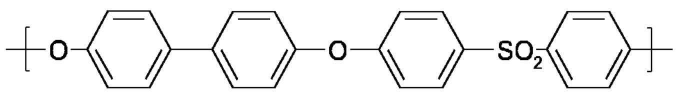
Ig

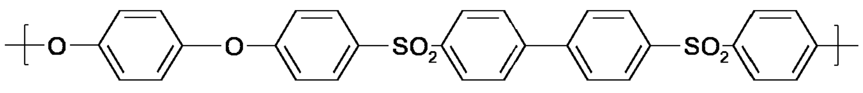
Ih

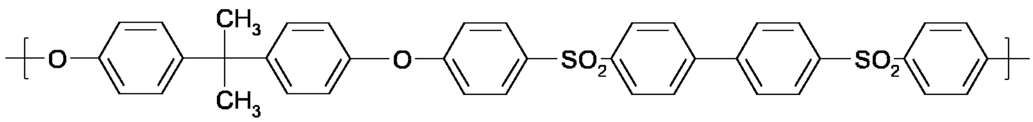

Ii

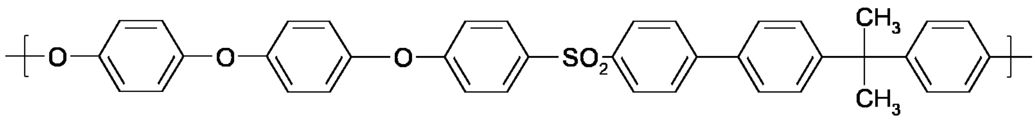

Ij

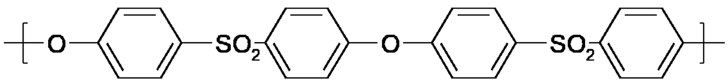

Ik

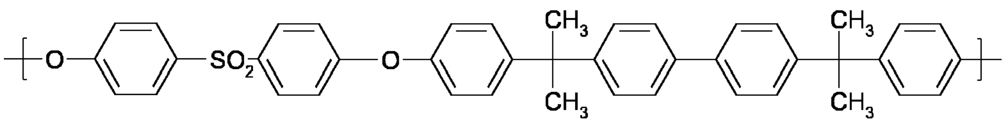

I l

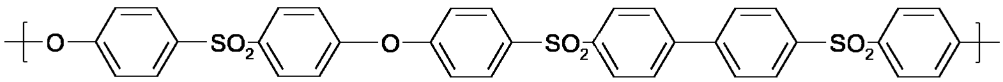

Im

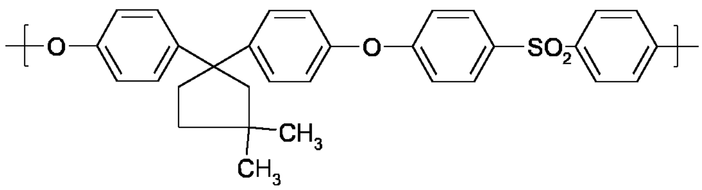

In

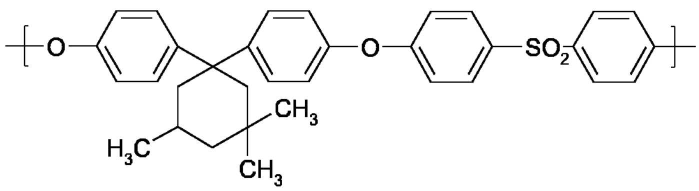

Io

In addition to the preferred building blocks Ia to Io, preference is also given to building blocks in which one or more 1,4-phenylene units deriving from hydroquinone are replaced by 1,3-phenylene units derived from resorcinol or by naphthylene units derived from dihydroxynaphthalene.

The building blocks Ia, Ig and Ik are particularly preferable as building blocks of general formula (I). It is also particularly preferable for the polyarylene ethers of component (A) to be constructed essentially of at least one variety of building blocks of general formula (I), in particular of at least one building block selected from Ia, Ig and Ik.

In a particularly preferred embodiment, Ar is = 1,4-phenylene, t is = 1, q is = 0, T is a chemical bond and Y is = $SO_2$. Particularly preferred polyarylene ether sulfones (A) constructed of the aforementioned repeat unit are referred to as polyphenylene sulfone (PPSU) of formula Ig.

In a further particularly preferred embodiment, Ar is = 1,4-phenylene, t is = 1, q is = 0, T is = $C(CH_3)_2$ and Y is = $SO_2$. Particularly preferred polyarylene ether sulfones (A) constructed of the aforementioned repeat unit are referred to as polysulfone (PSU) of formula Ia.

In a further particularly preferred embodiment, Ar is = 1,4-phenylene, t is = 1, q is = 0, T is = Y is = $SO_2$. Particularly preferred polyarylene ether sulfones constructed of the aforementioned repeat unit are referred to as polyether sulfone (PESU) of formula Ik.

Abbreviations such as PPSU, PESU and PSU in the context of the present invention comply with DIN EN ISO 1043-1 (Plastics - Symbols and Abbreviated terms - Part 1: Basic polymers and their special characteristics (ISO 1043-1:2001); German version of EN ISO 1043-1:2002).

Under the aspect of controlled sulfonation it is most preferable for the polyarylene(ether)sulfone to comprise building blocks selected from the group consisting of polysulfone units (PSU units), polyether sulfone units (PESU units)

and polyphenylene sulfone units (PPSU units).

When the aromatic polymer is a copolymer formed from polyether sulfone (PESU) and polyphenylene sulfone (PPSU), this copolymer may be, for example, a random copolymer or a block copolymer. Preference is often given to a random copolymer formed from polyether sulfone (PESU) and polyphenylene sulfone (PPSU) for the reason that a more homogenous material is obtained which shows no or little phase separation in the dissolved or solid state.

When the polyarylene(ether)sulfone is a copolymer formed from polyether sulfone (PESU) and polyphenylene sulfone (PPSU), this it can be preferred that the copolymer comprises from 1 to 20 mol% of polyphenylene sulfone (PPSU) and from 80 to 99 mol% of polyether sulfone (PESU), all based on the total sum of all repeating units of the copolymer.

The weight-average molecular weight $M_w$ of the polyarylene(ether)sulfone is typically preferably in the range from 10 000 to 150 000 g/mol, in particular in the range from 15 000 to 120 000 g/mol and more preferably in the range from 18 000 to 100 000 g/mol, as determined via gel permeation chromatography in dimethylacetamide as solvent versus narrowly distributed polymethyl methacrylate as standard.

Production methods leading to the aforementioned polyarylene(ether) sulfone are known per se to a person skilled in the art and described, for example, in Herman F. Mark, "Encyclopedia of Polymer Science and Technology", third edition, volume 4, 2003, chapter "Polysulfones" on pages 2 to 8 and also in Hans R. Kricheldorf, "Aromatic Polyethers" in: Handbook of Polymer Synthesis, second edition, 2005 on pages 427 to 443.

Preferably the polyarylene(ether)sulfone is treated with at least one sulfonating agent to give the sPES. The at least one sulfonating agent is suitably any compound known to a person skilled in the art that is capable of introducing at least one $SO_2X$ group, where X is Cl or OZ, where Z is H, Li, Na, K, Mg, Ca or $NH_4$, into the aromatic ring of the aromatic polymer. The $SO_2X$ group is preferably a sulfonic acid group ($-SO_3H$) or a group capable of reacting with water to form a sulfonic acid group. Groups of this type are known to a person skilled in the art and include, for example, chlorosulfonyl groups ($-SO_2Cl$). The $SO_2X$ group is more preferably therefore a sulfonic acid group ($-SO_3H$) or a chlorosulfonyl group ($-SO_2Cl$), most preferably the $SO_2X$ group is a sulfonic acid group ($-SO_3H$).

As described above methods for sulfonating the polyarylene(ether)sulfone are generally known to the person skilled in the art.

The reaction of the polyarylene(ether)sulfone with the at least one sulfonating agent in the method of the present invention sulfonates at least one of the aromatic rings of the polyarylene(ether)sulfone at least partially.

The mechanism of the sulfonation reaction is known as such to a person skilled in the art. Thereby it is particularly preferable for the sulfonation reaction to replace a hydrogen atom on the aromatic ring by a sulfonic acid group ($-SO_3H$).

Typically, from 0.001 to 1, preferably from 0.005 to 0.1 and more preferably from 0.01 to 0.08 $SO_2X$ groups per aromatic ring is introduced into the polyarylene(ether)sulfone. The sPES therefore typically has from 0.001 to 1, preferably from 0.005 to 0.1 and more preferably from 0.01 to 0.08 sulfonic acid groups per aromatic ring.

The number of $SO_2X$ groups per aromatic ring is determined by averaging over all the aromatic rings of the sPES. To this end, the number of $SO_2X$ groups in the sPES is divided by the number of aromatic rings in the sPES. Methods of determining the number of $SO_2X$ groups and the number of aromatic rings, each in the sPES, are known to a person skilled in the art. The number of $SO_2X$ groups is determinable, for example, by acid-base titration or by spectroscopic methods such as $H^1$ NMR spectroscopy or IR spectroscopy (infrared spectroscopy). Sulfonated aromatic polymers having $SO_2X$ groups on the aromatic ring display characteristic peaks and bands, making it possible to determine the number of $SO_2X$ groups per aromatic ring in the sPES. The ratio of sulfonated to nonsulfonated aromatic rings can also be determined by these methods, in particular by $H^1$NMR spectroscopy.

When the polyarylene(ether)sulfone has aromatic rings which differ in their degrees of substitution it is thus typically the case that the strongest nucleophilic aromatic rings are preferentially sulfonated.

When, and as it can be preferred, the polyarylene(ether)sulfone is, for example, a copolymer formed from polyether sulfone (PESU) and polyphenylene sulfone (PPSU), the aromatic rings of the biphenylene units of the polyphenylene sulfone (PPSU) are more nucleophilic than the aromatic rings of the biphenyl sulfone units of the copolymer. During the reaction of the aromatic polymer, then, the aromatic rings of the biphenylene units of the polyphenylene sulfone (PPSU) are sulfonated preferentially.

The sulfonation of the aromatic rings of the biphenylene units of the polyphenylene sulfone (PPSU) typically takes place in positions 3 and/or 3'.

Preferably, therefore, the sPES comprises at least one building block selected from the group consisting of building blocks of general formula (II) and building blocks of general formula (III).

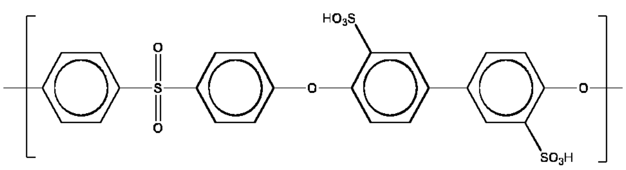

(II)

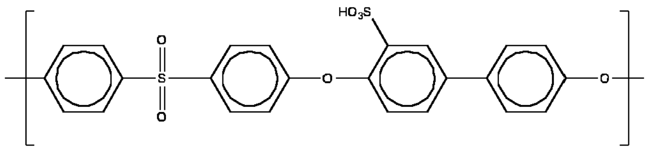

(III)

Thus, also disclosed herein is a process and the particles respectively wherein the sulfonated polyarylene(ether) sulfone comprises at least one building block selected from the group consisting of building blocks of general formula (II) and building blocks of general formula (III).

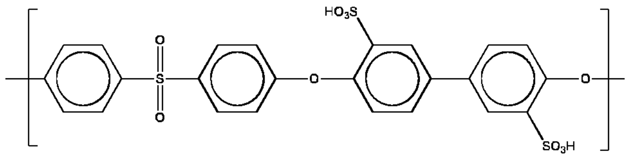

(II)

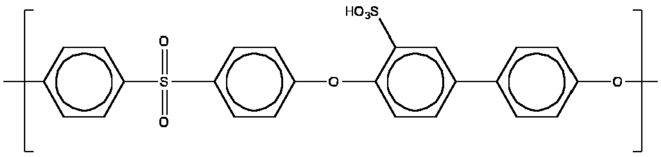

(III)

The sPES preferably has a number-average molecular weight ($M_n$) of from 10 000 to 35 000 g/mol, as determined by gel permeation chromatography in dimethylacetamide as solvent versus narrowly distributed polymethyl methacrylate as standard.

A process is disclosed wherein the sulfonated polyarylene(ether)sulfone is obtained by the post-sulfonation method, that is by reacting a polyarylene(ether)sulfone with a sulfonating agent. Thereby it is preferred that the polyarylene(ether)sulfone is reacted with concentrated sulfuric acid. Under the aspect of controlled sulfonation it is preferred that a sulfuric acid is employed which does not contain dissolved $SO_3$ or sulfuric acid anhydride. Thus, generally it is preferred that the sulfonating agent is sulfuric acid of a concentration of 95 to 100%, in particular from 96 to 99%. Usually the sulfonation can be carried out at low temperatures such as below 100 °C, in particular below 60 °C. Often strong cooling is not required and the sulfonation can be carried out above 10°C, such as 20°C or above. Usually a fast or very fast sulfonation reaction is observed at these temperatures. Thus, aside from employing sulfuric acid of the above specified concentration as well and carrying out the reaction at low temperatures, short reaction times can be preferred under the aspect of avoiding chain degradation. Thus, reaction times of several hours, such as 24 hours or less or much less such as 2 or 3 hours or less can be sufficient. It can be sufficient to obtain the desired degree of sulfonation and under the aspect of process efficiency preferred to keep the reaction time as low as possible, for instance within a few minutes such as 60 minutes or below.

As described above the particles which can be obtained by the process and which consist essentially of a sPES can be readily dissolved in a solvent (solvent L3). Thus, a solution S2 which comprises said particles is disclosed.

Solvent L3 can - in the context of the present disclosure - be an organic, especially aprotic polar solvent. Suitable solvent L3 can have a boiling point in the range of from 80 to 320°C, especially 100 to 280°C, preferably of from 150 to 250°C. Solvent L3, in particular an aprotic polar solvent considered for use is one in which the sPES is soluble. In this context it is preferred that "soluble" is to be understood that at room temperature (25 °C) not less than 5 % by weight, such as 10 % by weight, preferably not less than 20 wt% and more preferably not less than 25 wt% of the sPES dissolves, in each case based on the total weight of the solution in the aprotic polar solvent. A suitable aprotic polar solvent is, for example, a high-boiling ether, ester, ketone, asymmetrically halogenated hydrocarbon, anisole, dimethylformamide, dimethyl sulfoxide, sulfolane, dimethylacetamide (DMAC), N-methyl-2-pyrrolidone (NMP) or N-ethyl-2-pyrrolidone (NEP) or any combination thereof. An example for a protic solvent is lactic acid dimethyl amide (agnique). To enhance solubility, solvent L3 can for instance be a mixture of 2 to 3 solvents. In most cases it can be sufficient to use two or more preferably only one solvent.

Generally, as well as under the aspect of using the solution S2 in the manufacture of membranes, the solvent L3 may especially be DMAC, NMP, DMF, Pyrrolidone or NEP or any mixture thereof.

In general, it is possible that the solution S2 is mixed with at least one other material (in the following herein also referred to as "material M"). The material M can for instance be at least one further liquid and/or at least one hydrophilic polymer. Usually it is preferred that the solution S2 is mixed with no or only small amounts of at least one further liquid, whereby the at least one further liquid is only used in amounts that the sPES remains dissolved. The solution S2 may for

example be mixed with up to 10 % by weight, based on the solution S2, at least one further liquid. Such further liquid can in art of membrane manufacturing be a so called "non-solvent", for example be water, glycerol or isopropanol. Under the aspect of using the solution S2 in the manufacture of a binder, coating film, fiber or membrane it can be preferred that it is mixed with at least one hydrophilic polymer as a further component. Examples for the hydrophilic polymer are polyvinylpyrrolidone, polyethylene oxide and polyalkylenoxide-copolymers.

The solution S2 can be obtained in, and likewise the mixing with the material M can be carried out in at least one customary receptacle, in particular in at least one receptacle comprising a stirring device and preferably a temperature control device. Preparing the solution S2 as well as mixing it with the material M is usually preferably effected under agitation, preferably stirring.

Dissolving the sPES and optionally mixing with the material M, in particular the at least one hydrophilic polymer can be effected concurrently or in succession.

The duration of preparing the solution S2, including degassing, may vary between wide limits, generally a few minutes to several hours. The duration of preparing the solution S2 is typically adjusted such that a homogeneous solution of the sPES and optionally of the additional component in particular the hydrophilic polymer in the solvent L2, in particular an aprotic polar solvent, is obtained.

The temperature during the preparation of the solution S2 is preferably in the range from 20 to 120°C, more preferably in the range from 40 to 100°C. The concentration of the s PES and optionally of the additional component, in particular the hydrophilic polymer in the aprotic polar solvent depends in particular on the intended application and use of the desired film, membrane or coating.

The amount of sPES comprised in the solution S2 can vary in wide ranges. It can depend on the structure of the sPES as well as on the type of solvent L3. It can also depend on the application and process applied for this application. Generally, the solution S2 comprises with preference from 3 wt-% more such as 10 wt-% or more, based on the total weight of the solution S2 of the sPES. Thus, is can for example comprise up to 40 wt% or more of the sPES. It can be of particular preference that from 5 to 30 wt% of the sPES is contained, based on the total weight of the solution S2.

Disclosed herein is also a process for the manufacture of a binder, coating, film, fiber, membrane or formed article which comprises, optionally mixing the solution S2 with at least one other material, coating, spinning and/or casting the solution S2 or the obtained mixture.

Examples of such coating, spinning and/or casting are generally known to the person skilled in the art.

The sPES obtained by the process disclosed, the particles comprising the sPES as well as the solution S2 can be used in the manufacture of a binder, coating, film, fiber, membrane or formed article. Thus, the use of the sulfonated polyarylene(ether)sulfone obtained by the process according to the disclosure, the particles or the solution S2 in the manufacture of a binder, coating, film, fiber, membrane or formed article is disclosed. A binder, coating, film, fiber, membrane or formed article comprising - in a respective processed form - the sulfonated polyarylene(ether)sulfone obtained by the process according to the disclosure, the particles or the solution S2 is disclosed. Likewise, a binder, coating, film, fiber, membrane or formed article a obtained the process which comprises, optionally mixing the solution S2 with at least one other material, coating, spinning and/or casting the solution S2 or the obtained mixture is disclosed.

The process disclosed has the general advantage that hazards typically associated with handling strong acids and water is avoided as due to the use of the tooth rim dispersion machine only small amounts of solution S1 and liquid L1 are mixed at one given time. Also, the process disclosed has the general advantage that the TOC of the wastewater can be kept low. Further, as the particles are porous respectively of sponge-type structure and therefore readily dissolve they have the general advantage that they can be used efficiently in the manufacture of membranes.

**Examples**

Methods

Bulk density

A calibrated cylindric container (e.g. a 250 ml measuring cylinder) was filled loosely with the polymer particles and the weight of the polymer was related to the volume. By gently tapping the container on a solid surface the polymer particles were compacted until a constant volume was reached. This obtained reduced volume was then used for the determination of the bulk density.

Degree of sulfonation and determination of free sulfonic acid

Two independent titrations were performed.

In the first titration approx. 1 g polymer (sPES) was dissolved in 5 ml acid free DMF. After complete dissolution, 50 ml 2-propanol were added which resulted in the precipitation of the polymer. The precipitated polymer was removed from

the mother-liquor and washed with 2-propanol. The mother liquor and the washings were combined and titrated with 0,1 mol/l tetrabutylammoniumhydroxide solution (TBAH, in methanol / toluene) against a Solvotrode-electrode (Metrohm). Two equivalence points of titration were observed. The first equivalence point (EQP1-1) corresponds to the first of the two protons of the free sulfuric acid and the proton of the sulfonic acid groups of the remainder of the polymer in the mother liquor. The second equivalence point (EQP2-1) corresponds to the second of the two protons of the free sulfuric acid. The TBAH consumption for EQP2-1 is converted into mg KOH and related to the weighed-in amount of polymer (mg KOH/g polymer). 1 ml TBAH solution corresponds to 5,61 mg KOH.

In the second titration approx. 1 g polymer was dissolved in 50 ml DMF and titrated without any precipitation step. Thus, the complete sulfonic acid groups of the dissolved polymer could be titrated with 0,1 mol/l tetrabutylammonium-hydroxide solution (TBAH, in methanol / toluene). Again, two equivalent points, EQP1-2 and EQP2-2 were observed. The first equivalence point (EQP1-2) corresponds to the first proton of the free sulfuric acid and the proton of the sulfonic acid groups of the polymer. The second equivalence point (EP2-2) corresponds to the second proton of the sulfuric acid and (if any) potentially present phenolic OH endgroups of the sPES. The content of the free sulfonic acid can be determined by deduction of the TBAH consumption for EQP2-1 from the TBAH consumption for EQP1-2. The difference EQP1-2 minus EQP2-1 is converted into mg KOH and related to the weighed-in amount of the polymer. 1 ml TBAH solution corresponds to 5,61 mg KOH.

Dissolution time

The time to dissolve 5 g polymer in 95 g N-methylpyrrolidone which was agitated using a laboratory shaker with 200 rpm was measured with a stopwatch.

Fines

The fines (<100μm) were measured by air jet sieving. Thereby 40 to 100 g of the respective polymer was placed on a sieve with a mesh size of 100 μm. The fines were blown through the sieve with an air jet (1 bar, 75 $m^3/h$) for a defined time (10 min). Then the weight of the residual polymer sample on the sieve was measured and the mass lost was determined as the fines.

Gel permeation chromatography / size exclusion chromatography (GPC / SEC)

The polymer samples were dissolved with a concentration of 4 g/l in DMAc (dimethylacetamide) under addition of 0,5%by weight salt. The obtained solution was filtered with a standard syringe filter with a pore sizes of 0,2 mm. The injection volume was 100 ml at a column temperature off 40 °C. The size exclusion chromatography was performed with a combination of several columns. The signals were detected by a differential refractometer (measurement of the refractive index). The calibration was conducted with PMMA-standards with molecular weights, which ranged from M = 800 g/mol and M = 2.200.000 g/mol.

Ion exchange capacity (iec)calculated from KOH

The ion exchange capacity (iec, in milliequivalent per gram of polymer [meq/g]) can be calculated by division of the sulfonic acid specific KOH consumption [mg/g] as determined by titration by the molar mass of KOH.

$$iec = \text{KOH-consumption} / 56,11$$

Particle Morphology

The particle morphology was analyzed by optical microscopy of particles embedded in an epoxy resin and by preparing microtomes.

Particle size distribution

The particle size distribution was determined by using a Mastersizer 2000 (Malvern Instruments). The particles of a sample (approx. 5 g) were dispersed by an air jet (1 bar) and measured by laser diffraction. Then the volume fractions (for example the $d_{50}$-value) were evaluated.

Theoretical ion exchange capacity (iec)

The theoretical ion exchange capacity can be calculated as follows:

$$iec = \frac{2 * Molfraction(Fig.3) * 1000}{Mn(Fig.1) * Molfraction(Fig.1) + Mn(Fig.3) * Molfraction(Fig.3)} \text{ [meq/g]}$$

Viscosity Number

**[0138]** The viscosity number (reduced viscosity; VN) correlates with the molecular weight of the polymers and was measured, based on ISO 1628-5:1998, in a 1% polymer solution in N-methylpyrrolidone. Thereby the eluationtime (t) of a defined volume of the polymer solution in a Ub-belohde 1C-capillary is related to the running time of the pure solvent (t0) and normalized afterwards with the polymer concentration (c; in g/ml):

$$VN = [(t / t0) - 1] / c \text{ [ml/g]}$$

Copolmyer C1

Copolymer C1 was a non-sulfonated copolymer comprising repeat units of formula Ik) and Ig) in a molar ratio of 0.95 to 0.05. It was used as starting material for the preparation of sPES-1 to sPES-4.

On a lab scale the Copolymer C1 was be prepared as follows:
In a 4 liter glass reactor fitted with a thermometer, a gas inlet tube and a Dean-Stark-trap, 574,34 g (2,00 mol) of 4,4'-dichlorodiphenylsulfone (DCDPS), 475,53 g (1,90 mol) of 4,4'-dihydroxydiphenylsulfone (DHDPS), 18,621 g (0,10 mol) of 4,4'-biphenol and 297,15 g (2,15 mol) of potassium carbonate with a volume average particle size of 33,2 μm were suspended in 1050 ml NMP in a nitrogen atmosphere.

The mixture was heated to 190°C within one hour. In the following, the reaction time shall be understood to be the time during which the reaction mixture was maintained at 190 °C. The water that was formed in the reaction was continuously removed by distillation. Solvent that evaporated was replaced.

After a reaction time of 7 hours, the reaction was stopped by the addition of 1950 ml NMP and cooling down to room temperature (within one hour). The potassium chloride formed in the reaction was removed by filtration. The obtained copolymer solution was then precipitated in water, the resulting copolymer beads were separated and then extracted with hot water (85°C) for 20 h. Then the beads were dried at 120°C for 24 h at reduced pressure (< 100 mbar). The presence of the 4,4'-biphenol derived units Ig) in the copolymer can be verified by 1H-NMR-spectroscopy.

The obtained copolymer C1 had a glass transition temperature (Tg) of 230,8°C. The viscosity number and the molecular weight (Mn and Mw) are given in Table 1.

Sulfonated polyarylene(ether)sulfone sPES-1 to sPES-4 according to the Invention

I) Preparation of Solutions S1-1 to S1-4

From a reservoir sulfuric acid (96-%) was provided to the reaction vessel in an amount needed to provide a solution S1 with the targeted sPES concentration of 8 or 10% by weight. The temperature of the sulfuric acid was set to the sulfonation temperature. 50 kg of copolymer C1 was dosed to the mixture within 10 to 30 minutes. The reaction mixture was stirred for another 90 minutes to completely dissolve the copolymer C1. The reaction mixture was thereafter stirred for another 90 minutes.

Solutions S1-1 to S1-4 were obtained, comprising sPES-1 to sPES-4 respectively and sulfuric acid. The sulfonation temperature as well as the properties of the solutions S1-1 to S1-4 are given in table 1.

Table 1

| Solution S1 | Properties of the Solution S1 | | |
|---|---|---|---|
| | Sulfonation Temperature[a)] [°C] | Concentration of sPES [in % by weight based on the solution S1] | Viscosity [mPas] |
| S1-1 | 45 | 8 | 760 |
| S1-2 | 55 | 10 | 1525 |

(continued)

| Solution S1 | Properties of the Solution S1 | | |
|---|---|---|---|
| | Sulfonation Temperature[a)] [°C] | Concentration of sPES [in % by weight based on the solution S1] | Viscosity [mPas] |
| S1-3 | 55 | 10 | 1525 |
| S1-4 | 50 | 10 | 1670 |
| a)The sulfonation temperature equals the temperature at which the solutions S1-1 to S1-4 were fed into the tooth rim dispersion machine used for the experiments<br>II) Feeding solutions S1-1- to S1-4 to the tooth rim dispersion machine and contacting it with liquid L1-1 according to the Invention | | | |

In a reservoir equipped with a stirrer and with a wall temperature of 15 °C liquid L1-1 was prepared from 3125 l deionized water and nitric acid so that the nitric acid concentration in the liquid L1-1 was 0.27 % by weight, based on the liquid L1-1.

As tooth rim dispersion machine a one-stage rotor-stator tooth rim dispersion machine with a concave rotor was used (Cavitron® CD1010, with a cone mixing system; Verfahrenstechnik v. Hagen & Funke GmbH, Sprockhövel, Germany).

The tooth rim dispersion machine device functioned as a pump which due to operating it at maximum rotational speed of 12000rpm it drew the liquid L1 from the reservoir whereby the inline mixing device was operated in recirculation loop mode.

While the three-way valve was set to the sulfuric acid reservoir, the gear pump was started to pump the sulfuric acid to the tooth rim dispersion machine and flushing the piping while doing this. After the connecting pipes had been purged by the sulfuric acid, the respective solution S1 was fed to the tooth rim dispersion machine by opening the three-way valve towards the reaction vessel containing the solution S1 and pumping it into the tooth rim dispersion machine.

Upon the contacting of the respective solution S1 with the liquid L1-1 a suspension was obtained. The suspension was recirculated into the reservoir of liquid L1-1 whereby its solid content increased continually. To avoid settling, the suspension was stirred in the reservoir. The liquid L1 and the suspension respectively were passed through the tooth rim dispersion machine in an amount of about 75 l/min. The temperature of the suspension in the reservoir was monitored. In course of the process the temperature of the suspension rose by between 30 to 35 °C. The suspension was recirculated until the respective solution S1 was used up. Thereafter the pipes were purged with the sulfuric acid.

III) Liquid-solid separation and washing with liquid L3-1 and drying

The suspension was filtered through a Nutsche whereby 1 bar pressure was applied. A filter with a nominal pore size of 10 μm was used. The filter cake was washed with liquid L3-1, whereby it was stirred. As liquid L3-1 about 800 l of deionized water with a temperature of about 40°C per washing was used. The washing was interrupted as soon as the filtrate water had a pH of 4 or higher. Typically, not more than six washings were carried out. Thereafter, the obtained respective sPES was dried in the Nutsche under vacuum at 55 to 60 °C until a residual water content of below 2 % by weight, based on the weight of the sPES was obtained. The obtained sPES particles were collected.

Table 2 gives the conditions of the feeding of the solutions S1-1 to S1-4 to the tooth rim dispersion machine and the properties of the sPES-1 to sPES-4 obtained as well as of the copolymer C1.

Table 3 gives the degree of sulfonation as well as the amount of residual free acid of sPES-1 to sPES-4.

An illustrative embodiment of the process is shown in Figure 1.

Table 2

| | Viscosity number [mPas] | Gear pump feed of solution S1 [kg/min] | | Tg [°C] | VN [mPas] | Mw [g/mol] | Mn [g/mol] | PDI Mw/Mn | Particle size ($d_{50}$) [µm] | Fines smaller 100 µm [% by wt] | Matrix Density [$g/cm^3$] | Bulk density [g/l] | | Particle Density[c)] [g/ml] | Porosity[d)] [%] | Dissolution Time[e)] [min] |
|---|---|---|---|---|---|---|---|---|---|---|---|---|---|---|---|---|
| S1-1 | 760 | 3.9 | sPES-1 | | 86.3 | 72400 | 19900 | 3.6 | 546 | 7 | 1.402[a)] | 172 | 218[b)] | 0.900 | 36 | 9 |
| S1-2 | 1525 | 3.7 | sPES-2 | | 87.0 | 73700 | 20600 | 3.6 | 768 | 3 | 1.396[a)] | 179 | 217[b)] | 0.720 | 49 | 7 |
| S1-3 | 1525 | 4 | sPES-3 | | 86.9 | 77000 | 24200 | 3.2 | 830 | 1 | 1.403[a)] | 160 | 188[b)] | 0.749 | 46 | 7 |
| S1-4 | 1670 | 3.85 | sPES-4 | 233.4 | 88.5 | 77500 | 22700 | 3.4 | 859 | 2 | 1.398[a)] | 158 | 184[b)] | 0.679 | 51 | 7 |
| | | | C1 | 230.8 | 82.1 | 74 450[f)] | 21050[f)] | 3.6 | | | 1.387 | | | 1.078 | 22 | About 100 |

a)Determined analog DIN EN ISO 1183-3 (Helium Gas Pycnometer) after drying at 80°C and 100 mbar until constant weight;
b)After vibration compacting till volume constancy
c) Determined in a pycnometer at 25 °C with a low-viscosity paraffin oil after 10 s of treatment in an ultrasonic bath in order to remove adhering air bubbles from the particles
d) Calculated by dividing the particle density by the mean matrix density, using the mean matrix density of S1-1 to S1-4 of 1,400 $g/cm^3$
e)Time to obtain a 5% by weight solution of the polymer in NMP at room temperature under shaking
f) Averaged value from two measurements

Table 2 shows that with higher viscosity of the solution S1 the amount of fines was reduced. In addition, a reduction of solution time was observed. For comparative purposes copolymer C1 was dissolved under the same conditions to yield a 5% by weight solution in NMP. The dissolution time was about 100 min. Table 2 further shows that during the sulfonation and processing compared to the starting material, copolymer C1, no molecular weight degradation took place and that the molecular weight distribution remained the same. Table 2 further shows that porous particles with a foam structure are obtained.

Table 3

| sPES | Theoretical iec [meq/g] | KOH-consumption [mg/g] | iec (calc. from KOH) [meq/g] | Theoretical degree of sulfonation [mol-%] | Degree of sulfonation (calc. from iec) [mol-%] | Free acid [mg KOH/g] |
|---|---|---|---|---|---|---|
| sPES-1 | 0.213 | 11.8 | 0.210 | 5 | 4.9 | 0.5 |
| sPES-2 | | 11.5 | 0.205 | | 4.8 | 0.6 |
| sPES-3 | | 13.0 | 0.232 | | 5.4 | 0.6 |
| sPES-4 | | 11.3 | 0.201 | | 4.7 | 0.8 |

Table 3 shows that a controlled sulfonation took place and that the degree of sulfonation which could be expected from the molar amounts of the repeat units could be obtained. Table 3 also shows that the residual content of free sulfuric acid was under 3 mg KOH /g polymer.

Comparative Examples sPES-C1 to sPES-C4

For comparative purposes sulfonation trials were performed according to the procedure described for sPES-1. For the trials all used volumes and weights (including those for the washing) were downscaled by a factor of 10000. The sulfonation time and the method for contacting the obtained solution S1 with the liquid L1-1 were varied.

sPES-C1 was prepared without additional sulfonation time after copolymer C1 had dissolved (0 min instead of 90 min). The so obtained solution S1-5 was immediately after dissolution poured into the liquid L1-1 equipped with a magnetically coupled high speed agitator instead of the tooth rim dispersion machine. Instead of individual particles a monofilament was formed (see Fig 5) which had to be cut into small pieces for the washing.

sPES-C2 was prepared according to the procedure given for the preparation of solution S1-1. The so obtained solution S1-6 was added to the liquid L1-1 dropwise. Typically, 2-5 mm large, mostly spherical, particles which were not porous were obtained (Fig. 6).

sPES-C3 was prepared according to the procedure given for the preparation of solution S1-1, however instead of copolymer C1 a polyarylene(ether) sulfone homopolymer with repeat units Ik (PESU) with a viscosity number of 81.3 ml/g (Ultrason® E 6020P from BASF SE) was used. Solution S1-7 was obtained. After the sulfonation time solution S1-7 was poured into the liquid L1-1 equipped with a magnetically coupled high speed agitator instead of the tooth rim dispersion machine. Instead of individual particles a monofilament was formed which had to be cut into small pieces for the washing.

sPES-C4 was prepared according to the procedure given for the preparation of solution S1-1, however i) instead of copolymer C1 a polyarylene(ether) sulfone homopolymer with repeat units Ik (PESU) with a viscosity number of 81.3 ml/g (Ultrason® E 6020P from BASF SE) was used and ii) the sulfonation time was increased to 24 h. Solution S1-8 was obtained. After the sulfonation time solution S1-8 was poured into the liquid L1-1 equipped with a magnetically coupled high speed agitator instead of the tooth rim dispersion machine. Instead of individual particles a monofilament was formed which had to be cut into small pieces for the washing.

Six washing cycles with the same contact times and temperatures were applied. The pH of the last washing water was measured.

Table 4 gives the results of these comparative examples

Table 4

| sPES-C | Sulfonation time after dissolution at 45 °C | Method of contacting S1-5 to S1-8 with L1-1 | VN of the starting polymer [ml/g] | VN sPES-C [ml/g] | KOH-consumption [mg/g] | iec (calc from KOH) [meq/g) | Degree of sulfonation (calc from iec) [mol-%] | pH of 6th filtration water |
|---|---|---|---|---|---|---|---|---|
| sPES-C1 | 0 min | Pouring under high speed stirring | 82.1 | 81.5 | 9.5 | 0.169 | 4.0 | 2.6 |
| sPES-C2 | 90 min | dropwise addition | 82.1 | 83.3 | 12.2 | 0.217 | 5.1 | 2.2 |
| sPES-C3 | 90 min | Pouring under high speed stirring | 81.3 | 79.6 | 1.0 | 0.018 | 0.4 | 2.6 |
| sPES-C4 | 24 h | Pouring under high speed stirring | 81.3 | 72.5 | 6.1 | 0.109 | 2.6 | 2.5 |

Table 4 shows that solutions S1 can be obtained not only from copolymer C1. It also shows that when copolymer C1 is used as starting polymer a higher degree of sulfonation was obtained quicker and that less molecular weight degradation was observed. From the results for sPES-C1 it is evident that sulfonation at 45°C was mostly completed already after dissolution. At the same time the comparative examples show the advantage of using a tooth rim dispersion machine for instance for the washing efficiency.

**Claims**

1. A process for the manufacture of a sulfonated polyarylene(ether)sulfone comprising feeding of a solution (S1) comprising a sulfonated polyarylene(ether) sulfone and sulfuric acid into a tooth rim dispersion machine, wherein the solution S1 is thereby contacted with a liquid (L1) comprising water.

2. The process according to claim 1, wherein the liquid L1 comprises water and nitric acid.

3. The process according to at least one of the preceding claims wherein the liquid L1 has a temperature of from 10 to 25°C, measured prior to initial contact with the solution S1.

4. The process according to at least one of the preceding claims wherein the tooth rim dispersion machine is operated in recirculation mode.

5. The process according to at least one of the preceding claims wherein a pump equipped to transport liquids of a viscosity of at least 200 mPas, measured at 65°C and a shear rate of 10 $s^{-1}$ transports the solution S1.

6. The process according to at least one of the preceding claims wherein the pump is a gear pump.

7. The process according to at least one of the claims 1 to 6, wherein the sulfonated polyarylene(ether)sulfone comprises a building block of general formula (I)

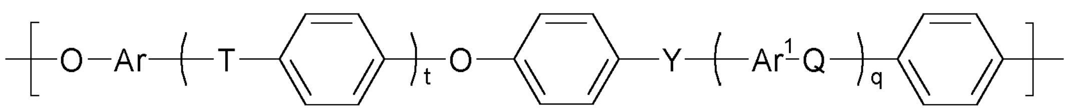

(I)

where

t and q are each independently 0, 1, 2 or 3,
Q, T and Y are each independently a chemical bond or a group selected from -O-, -S-, - $SO_2$-, S=O, C=O, -N=N- and -$CR^aR^b$-, where $R^a$ and $R^b$ are each independently a hydrogen atom or a $C_1$-$C_{12}$ alkyl, $C_1$-$C_{12}$ alkoxy or $C_6$-$C_{18}$ aryl group,
Ar and $Ar^1$ are each independently an arylene group having from 6 to 18 carbon atoms and where at least one of the building blocks comprises a phenylene and/or arylene group which is substituted with at least one -$SO_2$X group and
X is Cl or OZ, where Z is H, Li, Na, K, Mg, Ca or $NH_4$.

**8.** The process according to claim 7 wherein the sulfonated polyarylene(ether)sulfone comprises a building block of general formula (II) or (III) or (II) and (III)

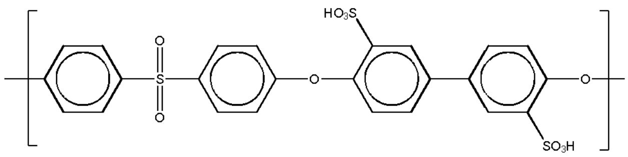
(II)

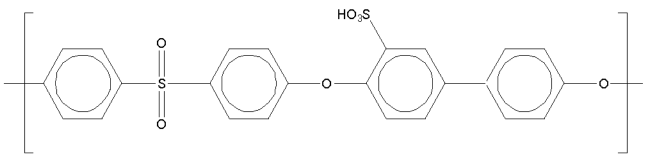
(III)

**9.** The process according to claim 7 or 8 wherein the sulfonated polyarylene(ether)sulfone is obtained by reacting a polyarylene(ether)sulfone with a sulfonating agent.

**10.** Particles obtainable by the process of at least one of the preceding claims, the particles essentially consisting of a sulfonated polyarylene(ether)sulfone having a foam structure.

**11.** The particles according to claim 10 having less than 20% by weight, based on the weight of the particles, of particles of mesh size below 100 $\mu$m, determined by air-jet sieving.

**12.** The particles according to claim 10 or 11 wherein the sulfonated polyarylene(ether)sulfone has a content of free acid of less than 3 mg KOH / g sulfonated polyarylene(ether)sulfone.

**13.** A solution (S2) comprising the particles according to at least one of the claims 10 to 12 in dissolved form.

**14.** A process for the manufacture of a binder, coating, film, fiber, membrane or formed article comprising, optionally mixing the solution S2 according to claim 13 with at least one other material, coating, spinning and/or casting the solution S2 or the obtained mixture.

**15.** Use of the sulfonated polyarylene(ether)sulfone obtained by the process according to at least one of the claims 1 to 9, the particles according to at least one of the claims 10 to 12 or the solution S2 according to claim 13 in the manufacture of a binder, coating, film, fiber, membrane or formed article.

**16.** A binder, coating, film, fiber, membrane or formed article comprising - in a respective processed form - the sulfonated polyarylene(ether)sulfone obtained by the process according to at least one of the claims 1 to 9 or, the particles according to at least one of the claims 10 to 12 or the solution S2 according to claim 13or obtained from the process according to claim 14.

**Patentansprüche**

**1.** Ein Verfahren zur Herstellung eines sulfonierten Polyarylen(ether)sulfons, umfassend das Zuführen einer Lösung

(S1), die ein sulfoniertes Polyarylen(ether)sulfon und Schwefelsäure enthält, in eine Zahnkranz-Dispergiermaschine, wobei die Lösung S1 dabei mit einer Flüssigkeit (L1), die Wasser enthält, in Kontakt gebracht wird.

2. Das Verfahren nach Anspruch 1, wobei die Flüssigkeit L1 Wasser und Salpetersäure enthält.

3. Das Verfahren nach mindestens einem der vorstehenden Ansprüche, wobei die Flüssigkeit L1 eine Temperatur von 10 bis 25 °C aufweist, gemessen vor dem erstmaligen Kontakt mit der Lösung S1.

4. Das Verfahren nach mindestens einem der vorstehenden Ansprüche, wobei die Zahnkranz-Dispergiermaschine im Rezirkulationsmodus betrieben wird.

5. Das Verfahren nach mindestens einem der vorstehenden Ansprüche, wobei eine Pumpe, die zum Transport von Flüssigkeiten mit einer Viskosität von mindestens 200 mPas (gemessen bei 65 °C und einer Scherrate von 10 $s^{-1}$) geeignet ist, die Lösung S1 transportiert.

6. Das Verfahren nach mindestens einem der vorstehenden Ansprüche, wobei die Pumpe eine Zahnradpumpe ist.

7. Das Verfahren nach mindestens einem der Ansprüche 1 bis 6, wobei das sulfonierte Polyarylen(ether)sulfon einen Baustein der allgemeinen Formel (I) umfasst:

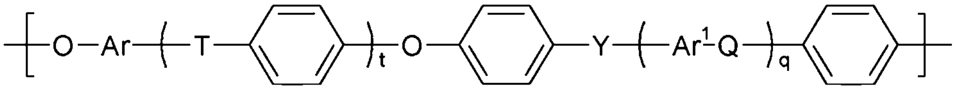

(I)

wobei

t und q jeweils unabhängig 0, 1, 2 oder 3 sind,
Q, T und Y jeweils unabhängig eine chemische Bindung oder eine Gruppe ausgewählt aus - O-, -S-, $-SO_2-$, S=O, C=O, -N=N- und $-CR^aRb-$ darstellen, wobei Ra und Rb jeweils unabhängig ein Wasserstoffatom oder eine C1-C12-Alkyl-, C1-C12-Alkoxy- oder C6-C18-Arylgruppe bedeuten,
Ar und Ar1 jeweils unabhängig eine Arylengruppe mit 6 bis 18 Kohlenstoffatomen darstellen, und mindestens einer der Bausteine eine Phenyl- und/oder Arylengruppe umfasst, die mit mindestens einer $-SO_2X$-Gruppe substituiert ist, wobei X Cl oder OZ ist, und Z H, Li, Na, K, Mg, Ca oder $NH_4$ ist.

8. Das Verfahren nach Anspruch 7, wobei das sulfonierte Polyarylen(ether)sulfon einen Baustein der allgemeinen Formel (II) oder (III) oder der Formeln (II) und (III) umfasst.

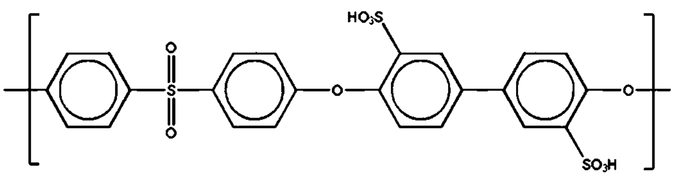

(II)

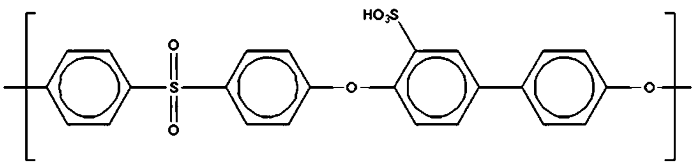

(III)

9. Das Verfahren nach Anspruch 7 oder 8, wobei das sulfonierte Polyarylen(ether)sulfon durch Umsetzung eines Polyarylen(ether)sulfons mit einem Sulfonierungsmittel erhalten wird.

10. Partikel, erhältlich durch das Verfahren nach mindestens einem der vorstehenden Ansprüche, wobei die Partikel im Wesentlichen aus einem sulfonierten Polyarylen(ether)sulfon mit einer Schaumstruktur bestehen.

**11.** Die Partikel nach Anspruch 10, die weniger als 20 Gew.-% an Partikeln mit einer Korngröße unter 100 µm aufweisen, bestimmt mittels Luftstrahlsiebung.

**12.** Die Partikel nach Anspruch 10 oder 11, wobei das sulfonierte Polyarylen(ether)sulfon einen Gehalt an freier Säure von weniger als 3 mg KOH/g sulfoniertes Polyarylen(ether)sulfon aufweist.

**13.** Eine Lösung (S2), die die Partikel nach mindestens einem der Ansprüche 10 bis 12 in gelöster Form umfasst.

**14.** Ein Verfahren zur Herstellung eines Binders, einer Beschichtung, eines Films, einer Faser, einer Membran oder eines Formartikels, umfassend das optionale Vermischen der Lösung S2 nach Anspruch 13 mit mindestens einem weiteren Material sowie das Beschichten, Spinnen und/oder Gießen der Lösung S2 oder der erhaltenen Mischung.

**15.** Verwendung des durch das Verfahren nach mindestens einem der Ansprüche 1 bis 9 erhaltenen sulfonierten Polyarylen(ether)sulfons, der Partikel nach mindestens einem der Ansprüche 10 bis 12 oder der Lösung S2 nach Anspruch 13 zur Herstellung eines Binders, einer Beschichtung, eines Films, einer Faser, einer Membran oder eines Formartikels.

**16.** Ein Binder, eine Beschichtung, ein Film, eine Faser, eine Membran oder ein Formartikel, der bzw. das - in jeweils verarbeiteter Form - das gemäß mindestens einem der Ansprüche 1 bis 9 erhaltene sulfonierte Polyarylen(ether) sulfon, die Partikel nach mindestens einem der Ansprüche 10 bis 12 oder die Lösung S2 nach Anspruch 13 umfasst oder aus dem Verfahren nach Anspruch 14 erhalten wird.

**Revendications**

**1.** Procédé de fabrication d'une polysulfone polyarylène(éther) sulfonée comprenant l'alimentation d'une solution (S1) comprenant une polysulfone polyarylène(éther) sulfonée et de l'acide sulfurique dans une machine de dispersion à couronne dentée, dans laquelle la solution S1 est ainsi mise en contact avec un liquide (L1) comprenant de l'eau.

**2.** Procédé selon la revendication 1, dans lequel le liquide L1 comprend de l'eau et de l'acide nitrique.

**3.** Procédé selon au moins l'une des revendications précédentes, dans lequel le liquide L1 a une température comprise entre 10 et 25 °C, mesurée avant le contact initial avec la solution S1.

**4.** Procédé selon au moins l'une des revendications précédentes, dans lequel la machine de dispersion à couronne dentée fonctionne en mode de recirculation.

**5.** Procédé selon au moins l'une des revendications précédentes, dans lequel une pompe capable de transporter des liquides ayant une viscosité d'au moins 200 mPa·s, mesurée à 65 °C et à un taux de cisaillement de 10 $s^{-1}$, transporte la solution S1.

**6.** Procédé selon au moins l'une des revendications précédentes, dans lequel la pompe est une pompe à engrenages.

**7.** Procédé selon au moins l'une des revendications 1 à 6, dans lequel la polysulfone polyarylène(éther) sulfonée comprend un motif structural de formule générale (I) :

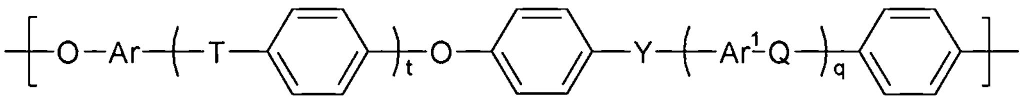
(I)

où :

- t et q sont indépendamment 0, 1, 2 ou 3,
- Q, T et Y sont indépendamment une liaison chimique ou un groupe choisi parmi -O-, - S-, $-SO_2-$, S=O, C=O, -N=N- et $-CR^aR^b-$, où $R^a$ et $R^b$ représentent indépendamment un atome d'hydrogène ou un groupe alkyle $C_1$-$C_{12}$, alcoxy $C_1$-$C_{12}$ ou aryle $C_6$-$C_{18}$,
- Ar et $Ar^1$ sont indépendamment un groupe arylène contenant de 6 à 18 atomes de carbone,

et dans lequel au moins un des motifs est substitué par au moins un groupe $-SO_2X$, où X est Cl ou OZ, Z représentant H, Li, Na, K, Mg, Ca ou $NH_4$.

8. Procédé selon la revendication 7, dans lequel la polysulfone polyarylène(éther) sulfonée comprend un motif structural de formule (II), (III) ou des deux formules (II) et (III).

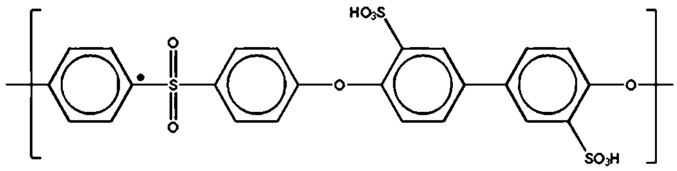

(II)

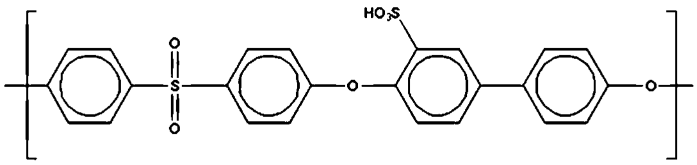

(III)

9. Procédé selon la revendication 7 ou 8, dans lequel la polysulfone polyarylène(éther) sulfonée est obtenue par réaction d'une polysulfone polyarylène(éther) avec un agent sulfonant.

10. Particules obtenables par le procédé selon au moins l'une des revendications précédentes, les particules consistant essentiellement en une polysulfone polyarylène(éther) sulfonée ayant une structure cellulaire (structure en mousse).

11. Particules selon la revendication 10 ayant moins de 20 % en poids, par rapport au poids total des particules, de particules ayant une taille de maille inférieure à 100 μm, déterminée par tamisage à jet d'air.

12. Particules selon la revendication 10 ou 11, dans lesquelles la polysulfone polyarylène(éther) sulfonée présente une teneur en acide libre inférieure à 3 mg KOH/g de polysulfone polyarylène(éther) sulfonée.

13. Solution (S2) comprenant les particules selon au moins l'une des revendications 10 à 12 sous forme dissoute.

14. Procédé de fabrication d'un liant, d'un revêtement, d'un film, d'une fibre, d'une membrane ou d'un article formé comprenant, facultativement, le mélange de la solution S2 selon la revendication 13 avec au moins un autre matériau, puis l'enduction, le filage et/ou le moulage de la solution S2 ou du mélange obtenu.

15. Utilisation de la polysulfone polyarylène(éther) sulfonée obtenue selon au moins l'une des revendications 1 à 9, des particules selon au moins l'une des revendications 10 à 12 ou de la solution S2 selon la revendication 13 pour la fabrication d'un liant, d'un revêtement, d'un film, d'une fibre, d'une membrane ou d'un article formé.

16. Liant, revêtement, film, fibre, membrane ou article formé comprenant - sous une forme traitée respective - la polysulfone polyarylène(éther) sulfonée obtenue selon au moins l'une des revendications 1 à 9, ou les particules selon au moins l'une des revendications 10 à 12, ou la solution S2 selon la revendication 13, ou obtenu par le procédé selon la revendication 14.

Figures

Fig1: Flow diagram of an embodiment of the process

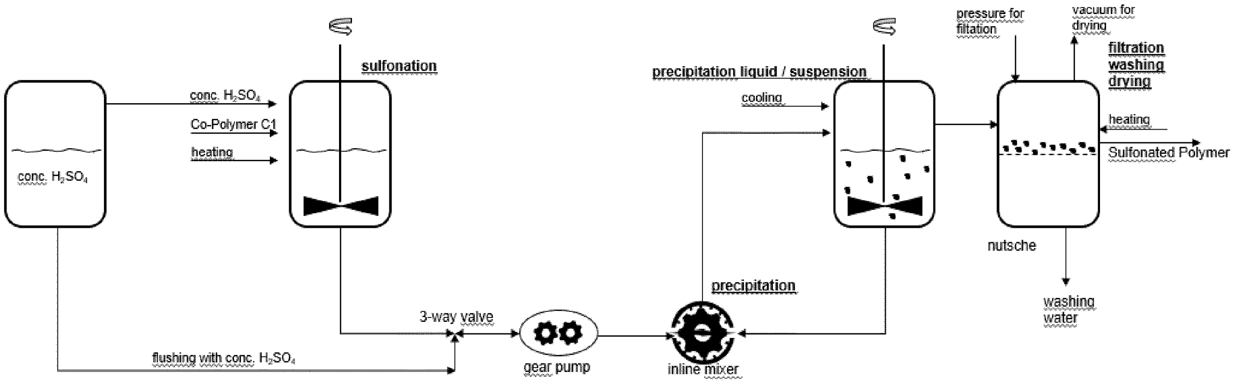

Fig 2 Typical particle shape resulting from the inline-mixer precipitation process

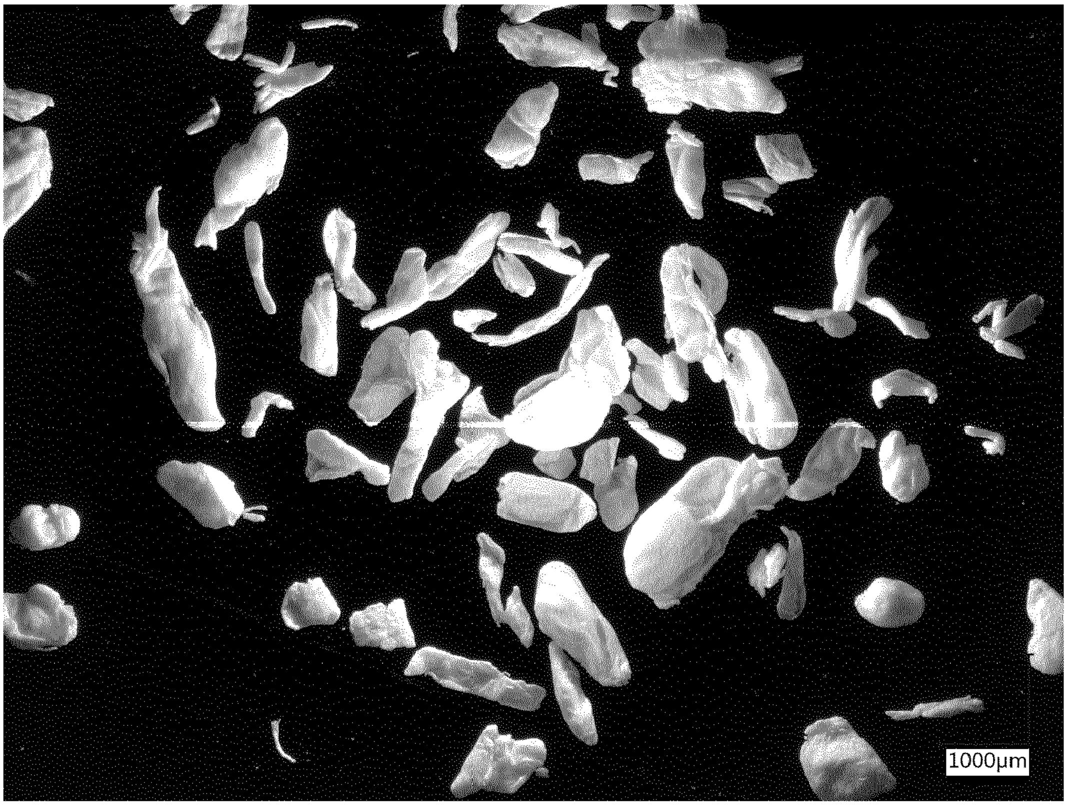

Fig. 3 Typical sPES particle morphology

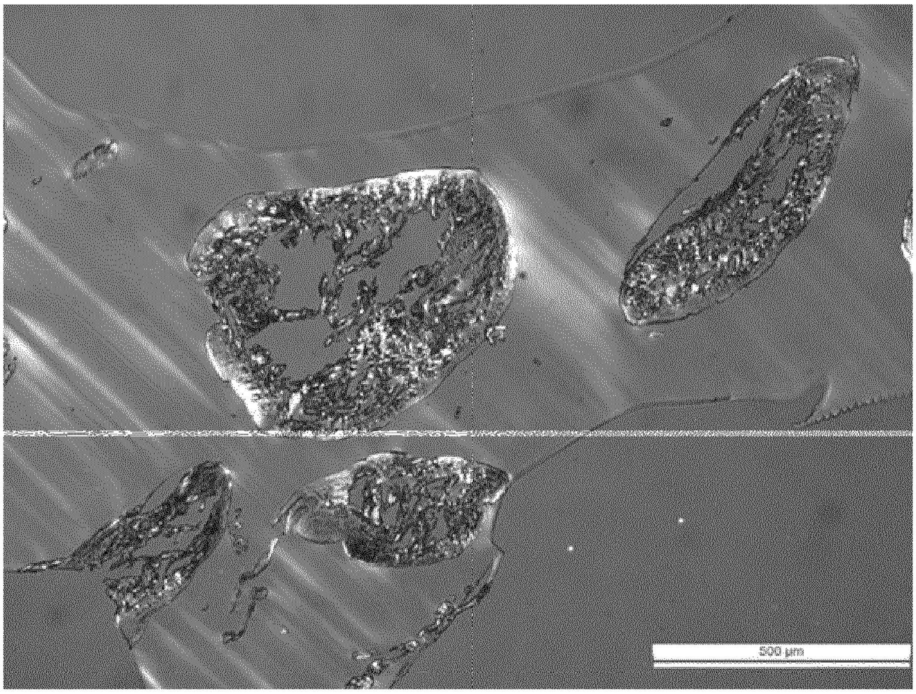

Fig 4: Typical sPES particle morphology

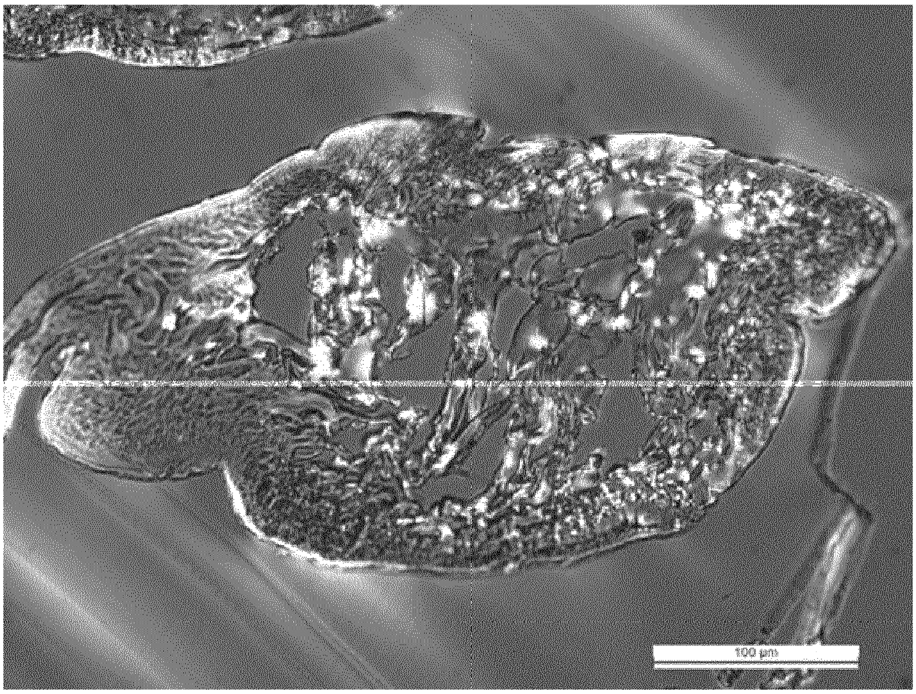

Fig. 5: Monofilament obtained by pouring solution S1-5 into stirred liquid L1-1

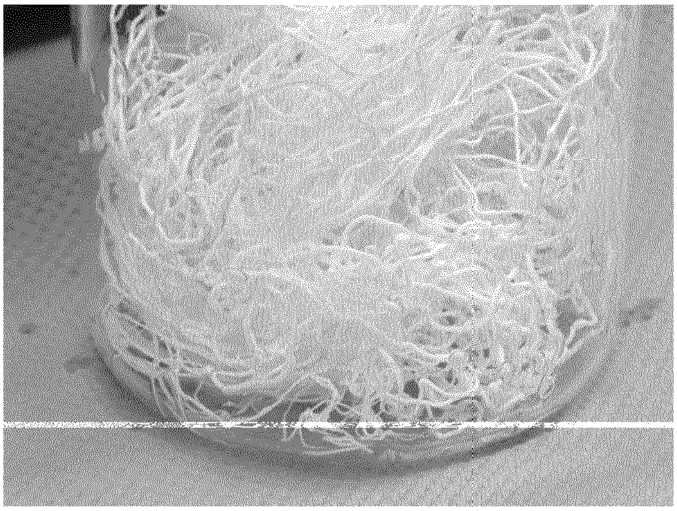

Fig. 6: Typical particles obtained by adding solution S1-6 to liquid L1-1

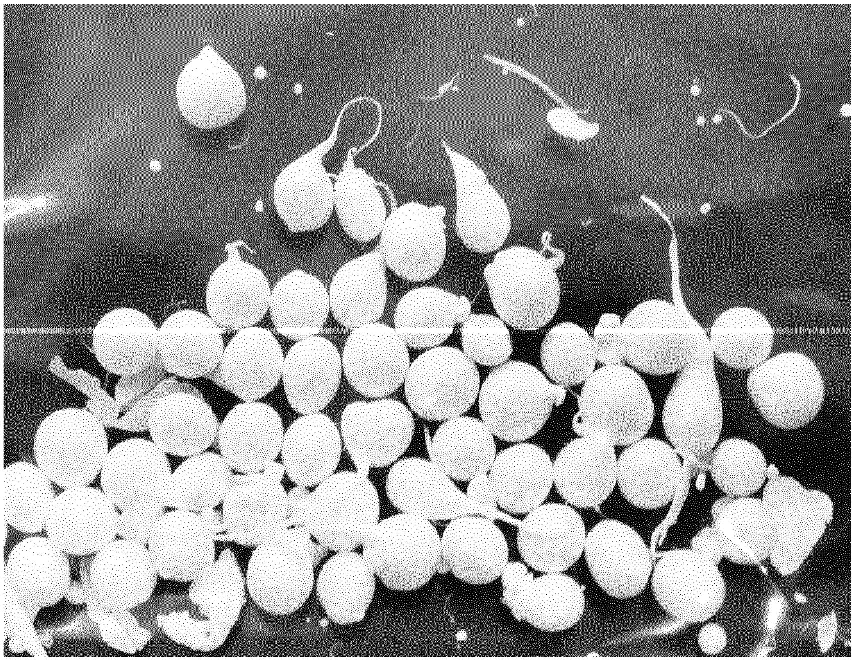

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 7258941 B2
- US 7081497 B2
- DE 112012005418 B4
- EP 3426711 B1
- CN 109731480 A
- EP 1561768 A1
- EP 1394879 A1
- US 2014350197 A1
- US 2019077919 A1
- US 2018009950 A1
- EP 3222651 A1
- US 2009005615 A1
- US 2008144431 A1
- US 3620684 A
- US 2009001188 A1
- WO 2008052143 A2
- WO 200666421 A


### Non-patent literature cited in the description


- *J. Appl. Pol. Sci.*, 2002, vol. 84, 2461-2473
- **BLANCO et al.** *J. Appl. Polym. Sci.*, 2002, vol. 84 (13), 2461-2473
- Polysulfones. **HERMAN F. MARK**. Encyclopedia of Polymer Science and Technology. 2003, vol. 4, 2-8
- Aromatic Polyethers. **HANS R. KRICHELDORF**. Handbook of Polymer Synthesis. 2005, 427-443